(19) Europäisches Patentamt
European Patent Office
Office européen des brevets

(11) **EP 2 778 938 B1**

(12) **EUROPEAN PATENT SPECIFICATION**

(45) Date of publication and mention of the grant of the patent:
**19.04.2017 Bulletin 2017/16**

(51) Int Cl.:
***G06F 13/40*** *(2006.01)*  ***H04L 25/00*** *(2006.01)*

(21) Application number: **14158848.3**

(22) Date of filing: **11.03.2014**

(54) **Apparatus, system, and method for performing link training and equalization**

Vorrichtung, System und Verfahren zur Durchführung von Link-Training und -Ausgleich

Appareil, système et procédé pour effectuer l'égalisation et l'apprentissage d'une liaison

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.03.2013 US 201313815916**

(43) Date of publication of application:
**17.09.2014 Bulletin 2014/38**

(73) Proprietor: **Intel Corporation Santa Clara, CA 95054 (US)**

(72) Inventors:
• **Das Sharma, Debendra Saratoga, CA California 95070 (US)**
• **Gadey Naga Venkata, Kanaka Fremont, CA California 94539 (US)**
• **Poladia, Harshit San Jose, CA California 95131 (US)**

(74) Representative: **HGF Limited Fountain Precinct Balm Green Sheffield S1 2JA (GB)**

(56) References cited:
**US-A1- 2005 201 454    US-A1- 2011 299 578**

## Description

## FIELD

This disclosure pertains to computing systems, and in particular to techniques for improving a link training and equalization procedure.

US2001/0299578 A1 describes a method and device for transmitting and receiving data with reduced power while maintaining connection quality.

The invention is defined according to the apparatus of claim 1 and the method of claim 8.

## BRIEF DESCRIPTION OF THE DRAWINGS

FIG. 1 is a schematic diagram illustrating an embodiment of a block diagram for a computing system including a multicore processor.

FIG. 2 is a schematic diagram illustrating an embodiment of a computing system including an a peripheral component interconnect express (PCie) compliant architecture.

FIG. 3 is a schematic diagram illustrating an embodiment of a PCie compliant interconnect architecture including a layered stack.

FIG. 4 is a schematic diagram illustrating an embodiment of a PCie compliant request or packet to be generated or received within an interconnect architecture.

FIG. 5 is a schematic diagram illustrating an embodiment of a PCie serial point to point fabric.

FIG. 6 is a schematic diagram illustrating a plot of a bit error rate (BER) eye with best pre-set and a plot of a BER eye with optimized transmitter coefficients.

FIG. 7 shows a method for link training and equalization consistent with an embodiment of the present disclosure.

FIG. 8 is a schematic diagram illustrating an embodiment of Phase O of a PCie link training and equalization procedure.

FIG. 9 is a schematic diagram illustrating an embodiment of Phase 1 of a PCie link training and equalization procedure.

FIG. 10 is a schematic diagram illustrating an embodiment of Phase O of a PCie link training and equalization procedure.

FIG. 11 is a schematic diagram illustrating an embodiment of Phase 1 of a PCie link training and equalization procedure.

FIG. 12 is a schematic diagram illustrating an embodiment of Phase 2 of a PCie link training and equalization procedure.

FIG. 13 is a schematic diagram illustrating a conventional Phase 3 process of a PCie link training and equalization procedure.

FIGS. 14A - 14B show blocks for a method for link training and equalization consistent with an embodiment of the present disclosure.

FIG. 15 is a display of two devices undergoing a link training and equalization procedure according to an embodiment of the present disclosure.

FIG. 16 is schematic diagram illustrating a system of components consistent with the present disclosure.

## DETAILED DESCRIPTION

In the following description, numerous specific details are set forth, such as examples of specific types of processors and system configurations, specific hardware structures, specific architectural and micro architectural details, specific register configurations, specific instruction types, specific system components, specific measurements/heights, specific processor pipeline stages and operation etc. in order to provide a thorough understanding of the present disclosure. It will be apparent, however, to one skilled in the art that these specific details need not be employed to practice the present disclosure. In other instances, well known components or methods, such as specific and alternative processor architectures, specific logic circuits/code for described algorithms, specific firmware code, specific interconnect operation, specific logic configurations, specific manufacturing techniques and materials, specific compiler implementations, specific expression of algorithms in code, specific power down and gating techniques/logic and other specific operational details of computer system haven't been described in detail in order to avoid unnecessarily obscuring the present disclosure.

Although the following embodiments may be described with reference to energy conservation and energy efficiency in specific integrated circuits, such as in computing platforms or microprocessors, other embodiments are applicable to other types of integrated circuits and logic devices. Similar techniques and teachings of embodiments described herein may be applied to other types of circuits or semiconductor devices that may also benefit from better energy efficiency and energy conservation. For example, the disclosed embodiments are not limited to desktop computer systems or Ultrabooks™. And may be also used in other devices, such as handheld devices, tablets, other thin notebooks, systems on a chip (SOC) devices, and embedded applications. Some examples of handheld devices include cellular phones, Internet protocol devices, digital cameras, personal digital assistants (PDAs), and handheld PCs. Embedded applications typically include a microcontroller, a digital signal processor (DSP), a system on a chip, network computers (NetPC), set-top boxes, network hubs, wide area network (WAN) switches, or any other system that may perform the functions and operations taught below. Moreover, the apparatus', methods, and systems described herein are not limited to physical computing devices, but may also relate to software optimizations for energy conservation and efficiency. As will become readily apparent in the description below, the embodiments of methods, apparatus', and systems described herein (whether in reference to hardware, firmware, software, or a combination thereof) are vital to a 'green technology' future balanced with performance considerations.

As computing systems are advancing, the components therein are becoming more complex. As a result, the interconnect architecture to couple and communicate between the components is also increasing in complexity to ensure bandwidth requirements are met for optimal component operation. Furthermore, different market segments demand different aspects of interconnect architectures to suit the market's needs. For example, servers require higher performance, while the mobile ecosystem is sometimes able to sacrifice overall performance for power savings. Yet, it's a singular purpose of most fabrics to provide highest possible performance with maximum power saving. Below, a number of interconnects are discussed, which would potentially benefit from aspects of the disclosure described herein.

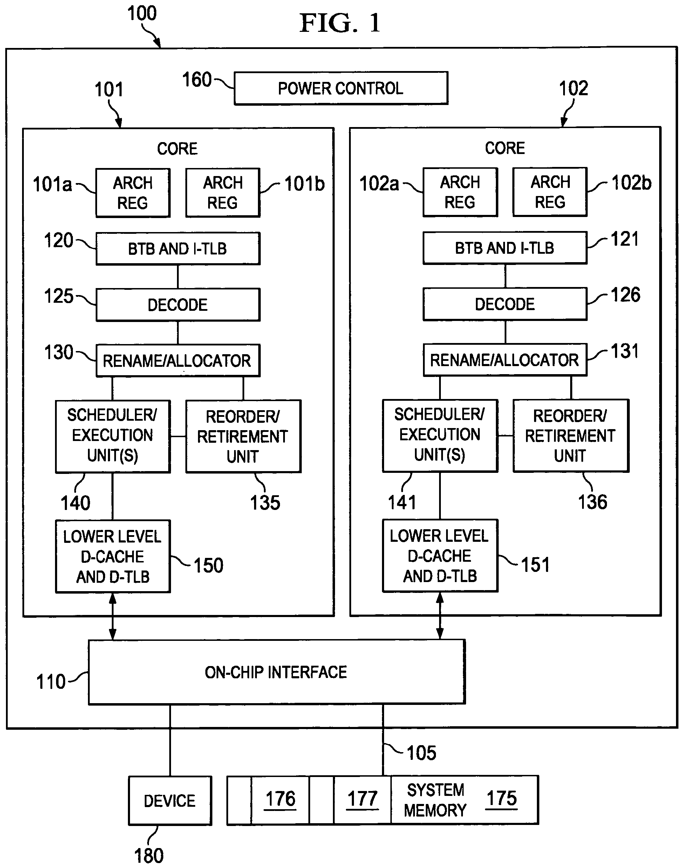

Referring to FIG. 1, an embodiment of a block diagram for a computing system including a multicore processor is depicted. Processor **100** includes any processor or processing device, such as a microprocessor, an embedded processor, a digital signal processor (DSP), a network processor, a handheld processor, an application processor, a co-processor, a system on a chip (SOC), or other device to execute code. Processor **100**, in one embodiment, includes at least two cores-core **101** and **102**, which may include asymmetric cores or symmetric cores (the illustrated embodiment). However, processor **100** may include any number of processing elements that may be symmetric or asymmetric.

In one embodiment, a processing element refers to hardware or logic to support a software thread. Examples of hardware processing elements include: a thread unit, a thread slot, a thread, a process unit, a context, a context unit, a logical processor, a hardware thread, a core, and/or any other element, which is capable of holding a state for a processor, such as an execution state or architectural state. In other words, a processing element, in one embodiment, refers to any hardware capable of being independently associated with code, such as a software thread, operating system, application, or other code. A physical processor (or processor socket) typically refers to an integrated circuit, which potentially includes any number of other processing elements, such as cores or hardware threads.

A core often refers to logic located on an integrated circuit capable of maintaining an independent architectural state, wherein each independently maintained architectural state is associated with at least some dedicated execution resources. In contrast to cores, a hardware thread typically refers to any logic located on an integrated circuit capable of maintaining an independent architectural state, wherein the independently maintained architectural states share access to execution resources. As may be seen, when certain resources are shared and others are dedicated to an architectural state, the line between the nomenclature of a hardware thread and core overlaps. Yet often, a core and a hardware thread are viewed by an operating system as individual logical processors, where the operating system is able to individually schedule operations on each logical processor.

Physical processor **100**, as illustrated in FIG. 1, includes two cores-core **101** and **102**. Here, core **101** and **102** are considered symmetric cores, i.e. cores with the same configurations, functional units, and/or logic. In another embodiment, core **101** includes an out-of-order processor core, while core **102** includes an in-order processor core. However, cores **101** and **102** may be individually selected from any type of core, such as a native core, a software managed core, a core adapted to execute a native Instruction Set Architecture (ISA), a core adapted to execute a translated Instruction Set Architecture (ISA), a co-designed core, or other known core. In a heterogeneous core environment (i.e. asymmetric cores), some form of translation, such a binary translation, may be utilized to schedule or execute code on one or both cores. Yet to further the discussion, the functional units illustrated in core **101** are described in further detail below, as the units in core **102** operate in a similar manner in the depicted embodiment.

As depicted, core **101** includes two hardware threads **101a** and **101b,** which may also be referred to as hardware thread slots **101a** and **101b**. Therefore, software entities, such as an operating system, in one embodiment potentially view processor **100** as four separate processors, i.e., four logical processors or processing elements capable of executing four software threads concurrently. As alluded to above, a first thread is associated with architecture state registers **101a**, a second thread is associated with architecture state registers **101b,** a third thread may be associated with architecture state registers **102a**, and a fourth thread may be associated with architecture state registers **102b**. Here, each of the architecture state registers (**101a**, **101b, 102a**, and **102b**) may be referred to as processing elements, thread slots, or thread units, as described above. As illustrated, architecture state registers **101a** are replicated in architecture state registers **101b,** so individual architecture states/contexts are capable of being stored for logical processor **101a** and logical processor **101b**. In core **101**, other smaller resources, such as instruction pointers and renaming logic in allocator and renamer block **130** may also be replicated for threads **101a** and **101b**. Some resources, such as re-order buffers in reorder/retirement unit **135**, ILTB **120**, load/store buffers, and queues may be shared through partitioning. Other resources, such as general purpose internal registers, page-table base register(s), low-level data-cache and data-TLB **115**, execution unit(s) 140, and portions of out-of-order unit **135** are potentially fully shared.

Processor **100** often includes other resources, which may be fully shared, shared through partitioning, or dedicated by/to processing elements. In FIG. **1**, an embodiment of a purely exemplary processor with illustrative logical units/resources of a processor is illustrated. Note that a processor may include, or omit, any of these functional units, as well as include any other known functional units, logic, or firmware not depicted. As illustrated, core **101** includes a simplified, representative out-of-order (OOO) processor core. But an in-order processor may be utilized in different embodiments. The OOO core includes a branch target buffer **120** to predict branches to be executed/taken and an instruction-translation buffer (I-TLB) **120** to store address translation entries for instructions.

Core **101** further includes decode module **125** coupled to fetch unit **120** to decode fetched elements. Fetch logic, in one embodiment, includes individual sequencers associated with thread slots **101a**, **101b**, respectively. Usually core **101** is associated with a first ISA, which defines/specifies instructions executable on processor **100**. Often machine code instructions that are part of the first ISA include a portion of the instruction (referred to as an opcode), which references/specifies an instruction or operation to be performed. Decode logic **125** includes circuitry that recognizes these instructions from their opcodes and passes the decoded instructions on in the pipeline for processing as defined by the first ISA. For example, as discussed in more detail below decoders **125**, in one embodiment, include logic designed or adapted to recognize specific instructions, such as transactional instruction. As a result of the recognition by decoders **125**, the architecture or core **101** takes specific, predefined actions to perform tasks associated with the appropriate instruction. It is important to note that any of the tasks, blocks, operations, and methods described herein may be performed in response to a single or multiple instructions; some of which may be new or old instructions. Note decoders **126**, in one embodiment, recognize the same ISA (or a subset thereof). Alternatively, in a heterogeneous core environment, decoders **126** recognize a second ISA (either a subset of the first ISA or a distinct ISA).

In one example, allocator and renamer block **130** includes an allocator to reserve resources, such as register files to store instruction processing results. However, threads **101a** and **101b** are potentially capable of out-of-order execution, where allocator and renamer block **130** also reserves other resources, such as reorder buffers to track instruction results. Unit **130** may also include a register renamer to rename program/instruction reference registers to other registers internal to processor **100**. Reorder/retirement unit **135** includes components, such as the reorder buffers mentioned above, load buffers, and store buffers, to support out-of-order execution and later in-order retirement of instructions executed out-of-order.

Scheduler and execution unit(s) block **140**, in one embodiment, includes a scheduler unit to schedule instructions/operation on execution units. For example, a floating point instruction is scheduled on a port of an execution unit that has an available floating point execution unit. Register files associated with the execution units are also included to store information instruction processing results. Exemplary execution units include a floating point execution unit, an integer execution unit, a jump execution unit, a load execution unit, a store execution unit, and other known execution units.

Lower level data cache and data translation buffer (D-TLB) **150** are coupled to execution unit(s) **140**. The data cache is to store recently used/operated on elements, such as data operands, which are potentially held in memory coherency states. The D-TLB is to store recent virtual/linear to physical address translations. As a specific example, a processor may include a page table structure to break physical memory into a plurality of virtual pages.

Here, cores **101** and **102** share access to higher-level or further-out cache, such as a second level cache associated with on-chip interface **110**. Note that higher-level or further-out refers to cache levels increasing or getting further way from the execution unit(s). In one embodiment, higher-level cache is a last-level data cache-last cache in the memory hierarchy on processor **100**-such as a second or third level data cache. However, higher level cache is not so limited, as it may be associated with or include an instruction cache. A trace cache-a type of instruction cache-instead may be coupled after decoder **125** to store recently decoded traces. Here, an instruction potentially refers to a macro-instruction (i.e. a general instruction recognized by the decoders), which may decode into a number of micro-instructions (micro-operations).

In the depicted configuration, processor **100** also includes on-chip interface module **110**. Historically, a memory controller, which is described in more detail below, has been included in a computing system external to processor **100**. In this scenario, on-chip interface **11** is to communicate with devices external to processor **100**, such as system memory **175**, a chipset (often including a memory controller hub to connect to memory **175** and an I/O controller hub to connect peripheral devices), a memory controller hub, a northbridge, or other integrated circuit. And in this scenario, bus **105** may include any known interconnect, such as multi-drop bus, a point-to-point interconnect, a serial interconnect, a parallel bus, a coherent (e.g. cache coherent) bus, a layered protocol architecture, a differential bus, and a GTL bus.

Memory **175** may be dedicated to processor **100** or shared with other devices in a system. Common examples of types of memory **175** include DRAM, SRAM, non-volatile memory (NV memory), and other known storage devices. Note that device **180** may include a graphic accelerator, processor or card coupled to a memory controller hub, data storage coupled to an I/O controller hub, a wireless transceiver, a flash device, an audio controller, a network controller, or other known device.

Recently however, as more logic and devices are being integrated on a single die, such as SOC, each of these devices may be incorporated on processor **100**. For example in one embodiment, a memory controller hub is on the same package and/or die with processor **100**. Here, a portion of the core (an on-core portion) **110** includes one or more controller(s) for interfacing with other devices such as memory **175** or a graphics device **180**. The configuration including an interconnect and controllers for interfacing with such devices is often referred to as an on-core (or un-core configuration). As an example, on-chip interface **110** includes a ring interconnect for on-chip communication and a high-speed serial point-to-point link **105** for off-chip communication. Yet, in the SOC environment, even more devices, such as the network interface, co-processors, memory **175**, graphics processor **180**, and any other known computer devices/interface may be integrated on a single die or integrated circuit to provide small form factor with high functionality and low power consumption.

In one embodiment, processor **100** is capable of executing a compiler, optimization, and/or translator code **177** to compile, translate, and/or optimize application code **176** to support the apparatus and methods described herein or to interface therewith. A compiler often includes a program or set of programs to translate source text/code into target text/code. Usually, compilation of program/application code with a compiler is done in multiple phases and passes to transform hi-level programming language code into low-level machine or assembly language code. Yet, single pass compilers may still be utilized for simple compilation. A compiler may utilize any known compilation techniques and perform any known compiler operations, such as lexical analysis, preprocessing, parsing, semantic analysis, code generation, code transformation, and code optimization.

Larger compilers often include multiple phases, but most often these phases are included within two general phases: (1) a front-end, i.e. generally where syntactic processing, semantic processing, and some transformation/optimization may take place, and (2) a back-end, i.e. generally where analysis, transformations, optimizations, and code generation takes place. Some compilers refer to a middle, which illustrates the blurring of delineation between a front-end and back end of a compiler. As a result, reference to insertion, association, generation, or other operation of a compiler may take place in any of the aforementioned phases or passes, as well as any other known phases or passes of a compiler. As an illustrative example, a compiler potentially inserts operations, calls, functions, etc. in one or more phases of compilation, such as insertion of calls/operations in a front-end phase of compilation and then transformation of the calls/operations into lower-level code during a transformation phase. Note that during dynamic compilation, compiler code or dynamic optimization code may insert such operations/calls, as well as optimize the code for execution during runtime. As a specific illustrative example, binary code (already compiled code) may be dynamically optimized during runtime. Here, the program code may include the dynamic optimization code, the binary code, or a combination thereof.

Similar to a compiler, a translator, such as a binary translator, translates code either statically or dynamically to optimize and/or translate code. Therefore, reference to execution of code, application code, program code, or other software environment may refer to: (1) execution of a compiler program(s), optimization code optimizer, or translator either dynamically or statically, to compile program code, to maintain software structures, to perform other operations, to optimize code, or to translate code; (2) execution of main program code including operations/calls, such as application code that has been optimized/compiled; (3) execution of other program code, such as libraries, associated with the main program code to maintain software structures, to perform other software related operations, or to optimize code; or (4) a combination thereof.

One interconnect fabric architecture includes the Peripheral Component Interconnect (PCI) Express (PCIe) architecture. A primary goal of PCIe is to enable components and devices from different vendors to interoperate in an open architecture, spanning multiple market segments; Clients (Desktops and Mobile), Servers (Standard and Enterprise), and Embedded and Communication devices. PCI Express is a high performance, general purpose I/O interconnect defined for a wide variety of future computing and communication platforms. Some PCI attributes, such as its usage model, load-store architecture, and software interfaces, have been maintained through its revisions, whereas previous parallel bus implementations have been replaced by a highly scalable, fully serial interface. The more recent versions of PCI Express take advantage of advances in point-to-point interconnects, Switch-based technology, and packetized protocol to deliver new levels of performance and features. Power Management, Quality Of Service (QoS), Hot-Plug/Hot- Swap support, Data Integrity, and Error Handling are among some of the advanced features supported by PCI Express.

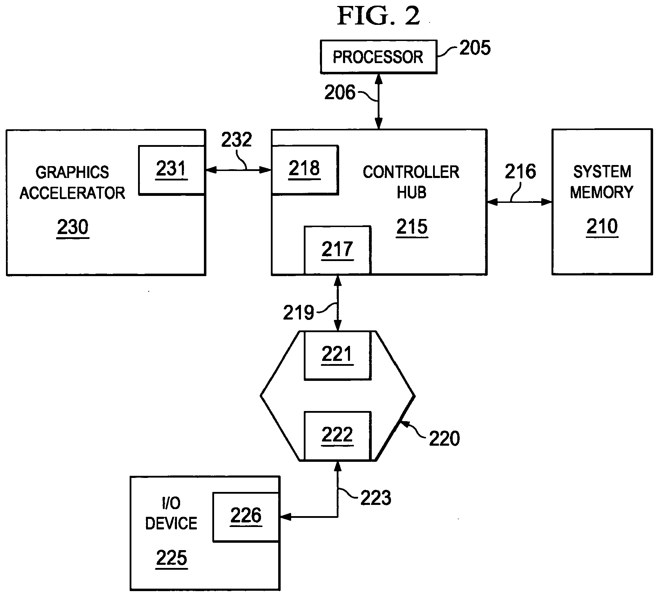

Referring to FIG. **2**, an embodiment of a fabric composed of point-to-point Links that interconnect a set of components is illustrated. System **200** includes processor **205** and system memory **210** coupled to controller hub **215**. Processor **205** includes any processing element, such as a microprocessor, a host processor, an embedded processor, a co-processor, or other processor. Processor **205** is coupled to controller hub **215** through front-side bus (FSB) **206**. In one embodiment, FSB **206** is a serial point-to-point interconnect as described below. In another embodiment, link **206** includes a serial, differential interconnect architecture that is compliant with different interconnect standard.

System memory **210** includes any memory device, such as random access memory (RAM), non-volatile (NV) memory, or other memory accessible by devices in system **200**. System memory **210** is coupled to controller hub **215** through memory interface **216**. Examples of a memory interface include a double-data rate (DDR) memory interface, a dual-channel DDR memory interface, and a dynamic RAM (DRAM) memory interface.

In one embodiment, controller hub **215** is a root hub, root complex, or root controller in a Peripheral Component Interconnect Express (PCIe or PCIE) interconnection hierarchy. Examples of controller hub **215** include a chipset, a memory controller hub (MCH), a northbridge, an interconnect controller hub (ICH) a southbridge, and a root controller/hub. Often the term chipset refers to two physically separate controller hubs, i.e. a memory controller hub (MCH) coupled to an interconnect controller hub (ICH). Note that current systems often include the MCH integrated with processor **205**, while controller 215 is to communicate with I/O devices, in a similar manner as described below. In some embodiments, peer-to-peer routing is optionally supported through the root complex device.

Here, controller hub 215 is coupled to switch/bridge **220** through serial link **219**. Input/output modules **217** and **221**, which may also be referred to as interfaces/ports **217** and **221**, include/implement a layered protocol stack to provide communication between controller hub **215** and switch **220**. In one embodiment, multiple devices are capable of being coupled to switch **220**.

Switch/bridge **220** routes packets/messages from device **225** upstream, i.e. up a hierarchy towards a root complex, to controller hub **215** and downstream, i.e. down a hierarchy away from a root controller, from processor **205** or system memory **210** to device **225**. Switch **220**, in one embodiment, is referred to as a logical assembly of multiple virtual PCI-to-PCI bridge devices. Device **225** includes any internal or external device or component to be coupled to an electronic system, such as an I/O device, a Network Interface Controller (NIC), an add-in card, an audio processor, a network processor, a hard-drive, a storage device, a CD/DVD ROM, a monitor, a printer, a mouse, a keyboard, a router, a portable storage device, a Firewire device, a Universal Serial Bus (USB) device, a scanner, and other input/output devices.

Often in the PCIe vernacular, such as device, is referred to as an endpoint. Although not specifically shown, device **225** may include a PCIe to PCI/PCI-X bridge to support legacy or other version PCI devices. Endpoint devices in PCIe are often classified as legacy, PCIe, or root complex integrated endpoints.

Graphics accelerator **230** is also coupled to controller hub **215** through serial link **232**. In one embodiment, graphics accelerator **230** is coupled to an MCH, which is coupled to an ICH. Switch **220**, and accordingly I/O device **225**, is then coupled to the ICH. I/O modules **231** and **218** are also to implement a layered protocol stack to communicate between graphics accelerator **230** and controller hub **215**. Similar to the MCH discussion above, a graphics controller or the graphics accelerator **230** itself may be integrated in processor **205**.

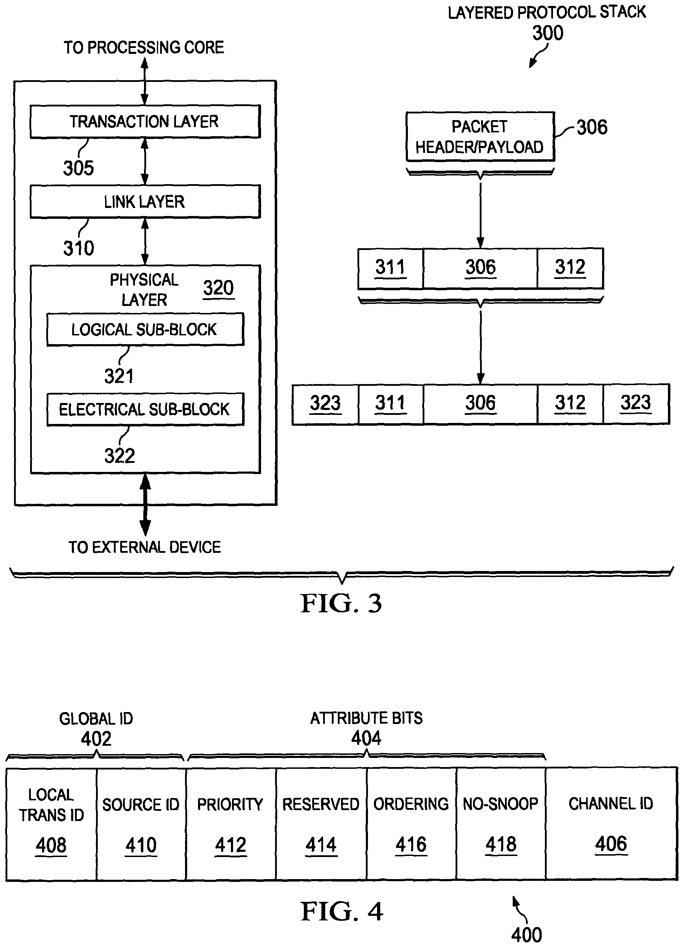

Turning to FIG. 3 an embodiment of a layered protocol stack is illustrated. Layered protocol stack **300** includes any form of a layered communication stack, such as a Quick Path Interconnect (QPI) stack, a PCIe stack, a next generation high performance computing interconnect stack, or other layered stack. Although the discussion immediately below in reference to FIGS. **2-5** are in relation to a PCIe stack, the same concepts may be applied to other interconnect stacks. In one embodiment, protocol stack **300** is a PCIe protocol stack including transaction layer **305**, link layer **310**, and physical layer **320**. An interface, such as interfaces **217, 218**, **221**, **222**, **226**, and **231** in FIG. 2, may be represented as communication protocol stack **300**. Representation as a communication protocol stack may also be referred to as a module or interface implementing/including a protocol stack.

PCI Express uses packets to communicate information between components. Packets are formed in the Transaction Layer **305** and Data Link Layer **310** to carry the information from the transmitting component to the receiving component. As the transmitted packets flow through the other layers, they are extended with additional information necessary to handle packets at those layers. At the receiving side the reverse process occurs and packets get transformed from their Physical Layer **320** representation to the Data Link Layer **310** representation and finally (for Transaction Layer Packets) to the form that may be processed by the Transaction Layer **305** of the receiving device.

*Transaction Layer*

In one embodiment, transaction layer **305** is to provide an interface between a device's processing core and the interconnect architecture, such as data link layer **310** and physical layer **320**. In this regard, a primary responsibility of the transaction layer **305** is the assembly and disassembly of packets (i.e., transaction layer packets, or TLPs). The translation layer **305** typically manages credit-base flow control for TLPs. PCIe implements split transactions, i.e. transactions with request and response separated by time, allowing a link to carry other traffic while the target device gathers data for the response.

In addition PCIe utilizes credit-based flow control. In this scheme, a device advertises an initial amount of credit for each of the receive buffers in Transaction Layer **305**. An external device at the opposite end of the link, such as controller hub **115** in FIG. 1, counts the number of credits consumed by each TLP. A transaction may be transmitted if the transaction does not exceed a credit limit. Upon receiving a response an amount of credit is restored. An advantage of a credit scheme is that the latency of credit return does not affect performance, provided that the credit limit is not encountered.

In one embodiment, four transaction address spaces include a configuration address space, a memory address space, an input/output address space, and a message address space. Memory space transactions include one or more of read requests and write requests to transfer data to/from a memory-mapped location. In one embodiment, memory space transactions are capable of using two different address formats, e.g., a short address format, such as a 32-bit address, or a long address format, such as 64-bit address. Configuration space transactions are used to access configuration space of the PCIe devices. Transactions to the configuration space include read requests and write requests. Message space transactions (or, simply messages) are defined to support in-band communication between PCIe agents.

Therefore, in one embodiment, transaction layer **305** assembles packet header/payload **306**. Format for current packet headers/payloads may be found in the PCIe specification at the PCIe specification website.

Quickly referring to FIG. 4, an embodiment of a PCIe transaction descriptor is illustrated. In one embodiment, transaction descriptor **400** is a mechanism for carrying transaction information. In this regard, transaction descriptor **400** supports identification of transactions in a system. Other potential uses include tracking modifications of default transaction ordering and association of transaction with channels.

Transaction descriptor **400** includes global identifier field **402**, attributes field **404** and channel identifier field **406**. In the illustrated example, global identifier field **402** is depicted comprising local transaction identifier field **408** and source identifier field **410**. In one embodiment, global transaction identifier **402** is unique for all outstanding requests.

According to one implementation, local transaction identifier field **408** is a field generated by a requesting agent, and it is unique for all outstanding requests that require a completion for that requesting agent. Furthermore, in this example, source identifier **410** uniquely identifies the requestor agent within a PCIe hierarchy. Accordingly, together with source ID **410**, local transaction identifier **408** field provides global identification of a transaction within a hierarchy domain.

Attributes field **404** specifies characteristics and relationships of the transaction. In this regard, attributes field **404** is potentially used to provide additional information that allows modification of the default handling of transactions. In one embodiment, attributes field 404 includes priority field **412**, reserved field **414**, ordering field **416**, and no-snoop field **418**. Here, priority sub-field **412** may be modified by an initiator to assign a priority to the transaction. Reserved attribute field **414** is left reserved for future, or vendor-defined usage. Possible usage models using priority or security attributes may be implemented using the reserved attribute field.

In this example, ordering attribute field **416** is used to supply optional information conveying the type of ordering that may modify default ordering rules. According to one example implementation, an ordering attribute of "0" denotes default ordering rules are to apply, wherein an ordering attribute of "1" denotes relaxed ordering, wherein writes may pass writes in the same direction, and read completions may pass writes in the same direction. Snoop attribute field **418** is utilized to determine if transactions are snooped. As shown, channel ID Field **406** identifies a channel that a transaction is associated with.

*Link Layer (refer to FIG. 3)*

Link layer **310**, also referred to as data link layer **310**, acts as an intermediate stage between transaction layer **305** and the physical layer **320**. In one embodiment, a responsibility of the data link layer **310** is providing a reliable mechanism for exchanging Transaction Layer Packets (TLPs) between two components a link. One side of the Data Link Layer **310** accepts TLPs assembled by the Transaction Layer **305**, applies packet sequence identifier **311**, i.e. an identification number or packet number, calculates and applies an error detection code, i.e. CRC **312**, and submits the modified TLPs to the Physical Layer **320** for transmission across a physical to an external device.

*Physical Layer*

In one embodiment, physical layer **320** includes logical sub block **321** and electrical sub-block **322** to physically transmit a packet to an external device. Here, logical sub-block **321** is responsible for the "digital" functions of Physical Layer **321**. In this regard, the logical sub-block includes a transmit section to prepare outgoing information for transmission by physical sub-block **322**, and a receiver section to identify and prepare received information before passing it to the Link Layer **310**.

Physical block **322** includes a transmitter and a receiver. The transmitter is supplied by logical sub-block **321** with symbols, which the transmitter serializes and transmits onto to an external device. The receiver is supplied with serialized symbols from an external device and transforms the received signals into a bit-stream. The bit-stream is de-serialized and supplied to logical sub-block **321**. In one embodiment, an 8b/10b transmission code is employed, where ten-bit symbols are transmitted/received. Here, special symbols are used to frame a packet with frames **323**. In addition, in one example, the receiver also provides a symbol clock recovered from the incoming serial stream.

As stated above, although transaction layer **305**, link layer **310**, and physical layer **320** are discussed in reference to a specific embodiment of a PCIe protocol stack, a layered protocol stack is not so limited. In fact, any layered protocol may be included/implemented. As an example, an port/interface that is represented as a layered protocol includes: (1) a first layer to assemble packets, i.e. a transaction layer; a second layer to sequence packets, i.e. a link layer; and a third layer to transmit the packets, i.e. a physical layer. As a specific example, a common standard interface (CSI) layered protocol is utilized.

As the frequency of serial links increase and chips migrate to new process technologies with ever decreasing device sizes, it becomes increasingly important to provide the capability to dynamically adjust the transmitter and receiver equalization settings to account for the platform and silicon variations.

PCIe Generation 3 (PCIe Gen3) is an example of an industry standard that had to so equalization on a per transmitter-receiver pair basis to ensure interoperability at 8 GT/s for the wide range of systems that deploy PCIe. However, the wide a variety of devices, manufactured by different vendors, with different process technologies, each with their proprietary transmitter/receiver designs, and proprietary hardware algorithms to adapt makes it a challenge to design components with guaranteed interoperability.

The present disclosure involves providing hardware hooks and using system software such as system BIOS, firmware, or micro-code to perform a link training and equalization procedure. The present disclosure may be applied to an upstream port or downstream port of an endpoint device or root complex device, respectively. In some embodiments, link training and equalization procedure includes two passes as will be described in detail below.

In particular, the present disclosure provides a mechanism to reduce the time for link training and equalization and increase its reliability. As will be described in full detail, a link training and equalization procedure consistent with the present disclosure may employ software to generate a set of coefficients to be applied to a transmission logic or receiver logic settings.

In some embodiments, software is employed to generate the set of coefficients from a full swing (FS) value and a low frequency (LF) value associated with a device coupled to the bus interface link (e.g., root complex device or endpoint device) which are applied to transmitter logic or receiver logic settings of the device coupled to the bus interface link.

In some embodiments, a software application generates coefficients to be applied to the transmitter component of an endpoint device such that a root complex device may meet the targeted BER during Phase 3 of a PCIe link training and equalization procedure.

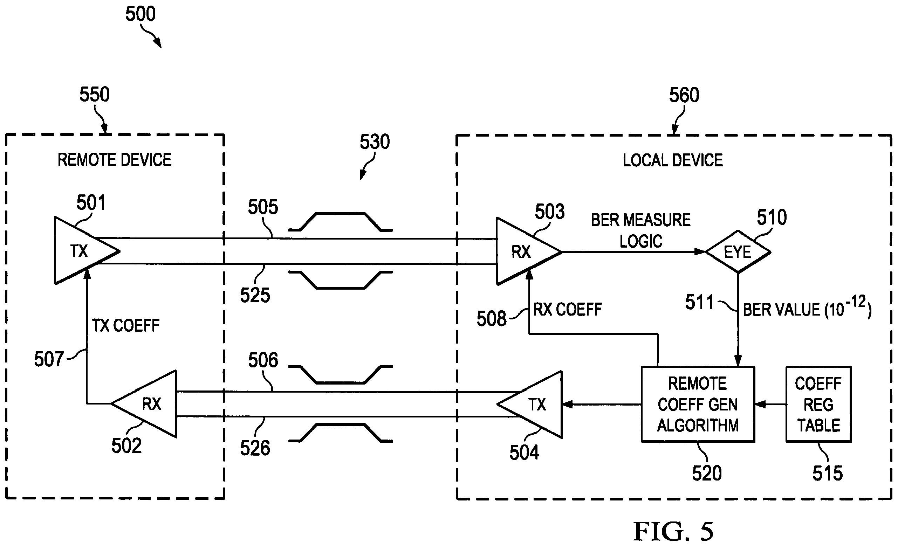

FIG. 5 is a schematic diagram illustrating an embodiment of a PCIe serial point to point fabric **500** is illustrated. Although an embodiment of a PCIe serial point-to-point link is illustrated, a serial point-to-point link is not so limited, as it includes any transmission path for transmitting serial data. In the embodiment shown, a basic PCIe link includes two, low-voltage, differentially driven signal pairs: a transmit pair **501/504** and a receive pair **502/503**.

Accordingly, device **550** includes transmission logic **506** to transmit data to device **510** and receiving logic **507** to receive data from device **560**. In other words, with respect to device **550**, two transmitting paths, i.e. paths **505** and **525**, and two receiving paths, i.e. paths **506** and **526**, are included in a PCIe link.

A transmission path may refer to any path for transmitting data, such as a transmission line, a copper line, an optical line, a wireless communication channel, an infrared communication link, or other communication path. A connection between two devices, such as device **550** and device **560**, is referred to as a link, such as link **530**. In some embodiments, link **530** is a PCIe bus interface link.

A link may support multiple lanes - each lane representing a set of differential signal pairs (one pair for transmission, one pair for reception). To scale bandwidth, a link may aggregate multiple lanes denoted by xN, where N is any supported Link width, such as 1, 2, 4, 8, 12, 16, 32, 64, or wider. In some embodiments, a lane may be referred to as a channel of a communications link (*e.g.*, link **530**). Moreover, in the schematic diagram of FIG. 5, only one lane (pairs **505/525** and **506/526**) is shown in the PCIe serial point to point fabric **500**.

PCIe link **530** may enable devices **550**, **560** to communicate with one another. In some embodiments of the present disclosure, device **560** is a local device whereas device **550** may be a remote device. Furthermore, either device **550** or device **560** may be characterized as a root complex device or an endpoint device. For example, in some embodiments, device **560** is a root complex device and device **550** is an endpoint device. Notably, because device **550** and device **560** may communicate to each other via link **530**, device **550** and device **560** may be referred to as "link partners" to one another.

A differential pair may refer to two transmission paths, such as lines **505** and **525**, to transmit differential signals. As an example, when line **505** toggles from a low voltage level to a high voltage level, i.e. a rising edge, line **525** drives from a high logic level to a low logic level (i.e. a falling edge). Differential signals potentially demonstrate better electrical characteristics, such as better signal integrity, i.e. cross-coupling, voltage overshoot/undershoot, ringing, etc. This allows for better timing window, which enables faster transmission frequencies.

In addition, a transmitter or receiver component (*e.g.*, transmission logic **501/504**, receiver logic **502/503**) of a device (e.g. device **550** or device **560**) may have transmitter or receiver settings, respectively, which may be set, adjusted, optimized, etc. In some embodiments, a set of coefficients may be applied to the transmitter or receiver settings with the aim to achieve communication capability between the devices **550**, **560** with minimal data loss.

For example, a bit error rate (BER), which may define the threshold error rate for data transmitted from one device to the other for any particular lane or link. For instance, the BER for a given link may be $10^{-4}$ or $10^{-12}$ depending on the threshold specified by the link training and equalization procedure of a particular communications protocol. In the embodiment shown in FIG. 5, the BER for each lane of link **530** is $10^{-12}$.

One having ordinary skill in the art may appreciate that a bit error rate (BER) may be defined as the ratio of the number of bits incorrectly received (errors) and the total number of bits received, according to some embodiments of the present disclosure.

In some embodiments, the set of coefficients may be generated within a remote coefficient algorithm module **520** from coefficient data stored in a coefficient register table **515**. Once the coefficients are derived, they may be transferred to transmission logic **506** and receiver logic **507**, as shown by paths **507**, **508** in FIG. 5. Alternatively, a set of default coefficients located within registers of the transmitter or receiver components (*e.g.*, provided by manufacturer) of the devices **550**, **560** may be applied to the transmission and receiver logic **506**, **507**. Moreover, a set of coefficients may be communicated to each device **550**, **560** via symbols (TS1/TS2 symbols) to each link partner during a protocol defined Link Training and Status State Machine (LTSSM) states according to an embodiment which employs PCIe.

In some embodiments, the generated coefficients may be applied to a finite impulse response (FIR) filter to determine whether the transmission logic **506** or receiver logic **507** is performing optimally, according to pre-define conditions.

Advantageously, an adaptive FIR filter may be utilized in link training and equalization procedures to identify coefficients during runtime according to particular attributes of a physical channel (*e.g.*, lane or link). In some embodiments, the product of the generated coefficients and a set if received of received pulses are added together to produce a filter o

Most notably, in some embodiments of the present disclosure, a new set of coefficients are generated and passed along to the transmission logic **506** or receiver logic **507** respectively until the target BER is reached. For example, if the target BER is $10^{-12}$, the error rate of data transmitted is measured (*e.g.* BER eye **510**), results of which are sent to the remote coefficient generation algorithm module **520** (*e.g.,* path **511**), and new coefficients are generated if the target BER is not achieved. Once the target BER is achieved, no new coefficients are generated and applied to the transmission and receiver logic **506/507**.

The present disclosure provides a mechanism to reduce the time for link training and equalization and increase its reliability. Specifically, a link training and equalization procedure consistent with the present disclosure may utilize a software application which executes an algorithm which generates a set of coefficients for a transmission logic or receiver logic settings.

In some embodiments, the software application reads a full swing (FS) value and low frequency (LF) value associated with a device coupled to the bus interface link (*e.g.,* root complex device or endpoint device) from a storage unit or element (e.g. configuration and status register) and inputs these values into an algorithm to generate a set of coefficients to be applied to transmitter or receiver settings of a device coupled to the bus interface link.

In some embodiments, the software application generates coefficients to be applied to the transmitter component of an endpoint device such that a root complex device may meet the targeted BER during Phase 3 of a PCIe link training and equalization procedure.

Equalization may be performed either at the transmission logic **506** or the receiver logic **507**. One having ordinary skill in the art may appreciate that because a received signal may be mixed with channel noise, equalization procedure(s) may add noise and degrade the signal to noise ratio (SNR) associated with a given lane which is typically not characterized with receiver logic **507**. Therefore, in some embodiments, equalization may be effective at the transmitter side (*e.g.*, transmission logic **506**).

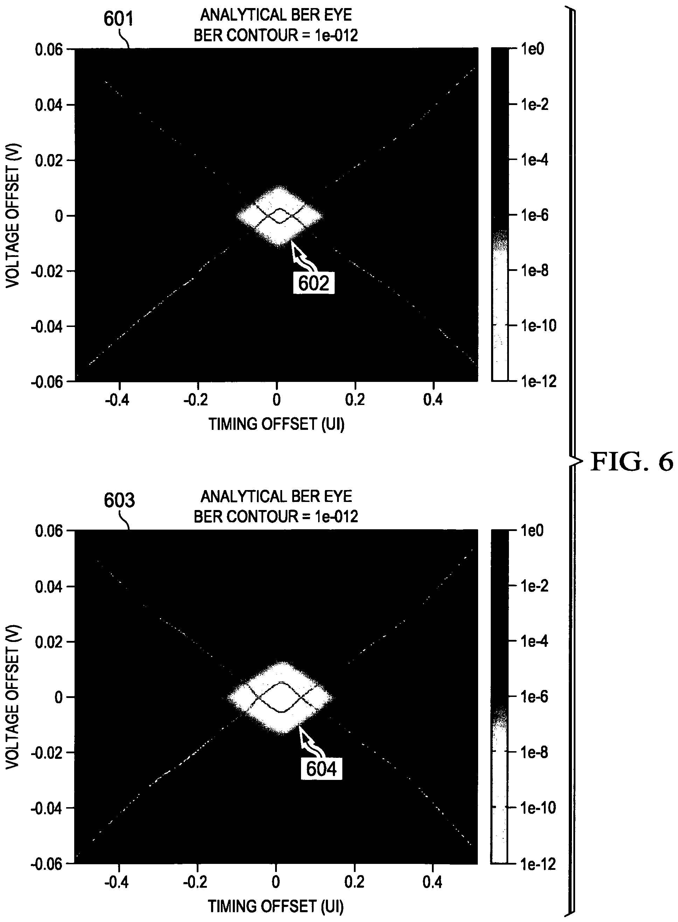

Moving forward through the figures, FIG. 6 is a schematic diagram illustrating plots of bit error rate (BER) eye diagrams with best pre-sets and optimized transmitter coefficients. One having ordinary skill in the art may appreciate that a BER eye plot is an intuitive graphical representation of electrical and optical communication signals. As such, the quality of signals transmitted and received in a communications channel may be judged from the appearance of a BER eye plot. BER eye plots are important because they may help determine whether a communication system may faithfully transmit bits of data with as few errors as possible.

FIG. 6 shows diagram illustrating a plot **601** of a bit error rate (BER) eye **602** with best pre-set coefficients and a plot **603** of a BER eye **604** with optimized transmitter or receiver coefficients. As shown, the height of the BER eye **602** in plot **601** is less than the height of the BER eye **604** in plot **603**. One having ordinary skill in the art may appreciate that the BER eye height defines a noise margin of the system. In some embodiments, a higher BER eye indicates less noise in a communications channel than channel noise attributed to a smaller BER eye.

Therefore, according to some embodiments of the present disclosure, the BER eye **604** in plot **603** indicates less noise and a lower bit error rate in the communications channel due to optimized transmitter or receiver settings. Alternatively, the BER eye **602** in plot **601** indicates greater noise and a higher bit error rate in the communications channel attributed to the best pre-set coefficients.

Accordingly, a lower bit error rate may be achieved in a channel of a communications link (*e.g.,* lane of a bus interface link) when an optimized set of coefficients are applied to a transmitter or receiver component (*e.g.,* transmission logic or receiver logic). As such, optimized transmitter or receiver coefficients take into account the physical characteristics of a particular channel of a communications link. A system and method consistent with the present disclosure includes identifying optimal transmitter or receiver coefficients to decrease a bit error rate to increase data transmission performance within communication systems.

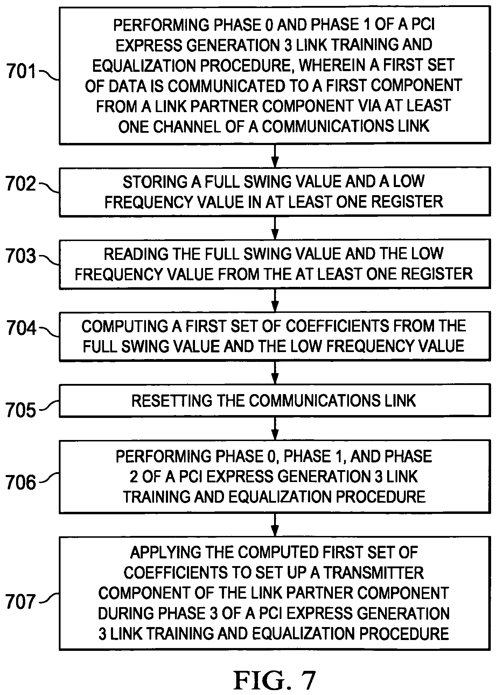

FIG. 7 shows a method **700** for link training and equalization consistent with an

embodiment of the present disclosure. In some embodiments, method **700** begins with performing Phase 0 and Phase 1 of a PCIe Gen 3 link training and equalization procedure (block **701**). During Phase 0 and Phase 1, a first set of data is communicated to a first component from a link partner component via at least one channel of a communications link.

The first set of data may include Ordered Set(s), preset(s), hint(s), FS and LF

values, etc. Additionally, the first component may be characterized as a root complex or endpoint device and which may include an upstream port or downstream port.

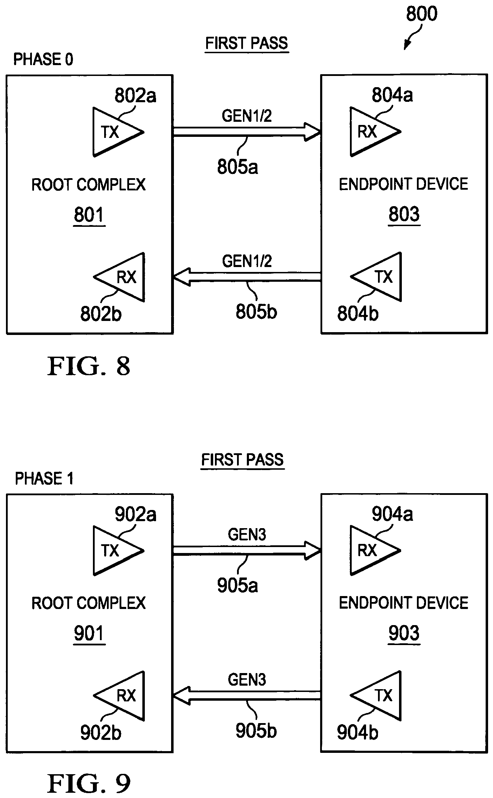

FIG. 8 is a schematic diagram **800** illustrating an embodiment of Phase 0 of a

PCIe link training and equalization procedure. As shown, two components, root complex device **801** and endpoint device **803** are coupled to each other via differential pairs **805a/805b** (shown by arrows) of a communications link.

Root complex device **801** and endpoint device **803** includes transmission logic

(**802a**, **804b** respectively) and receiver logic (**804a**, **804b**) to enable communication between the two devices **801**, **803**. In some embodiments, root complex device **801** may include a downstream port (see FIG. 2) and endpoint device **803** may include an upstream port (see FIG. 2).

In some embodiments, Phase 0 (*e.g.,* of a PCIe link training and equalization

procedure) may include transmitting a first set of data (*e.g.,* TS 1 Ordered Sets, Preset value(s), Hints, etc.) from the upstream port (*e.g.,* of endpoint device **801**) to the downstream port (*e.g.,* of root complex device **803**). Data may be transferred between the devices **801**, **803** at a first data transmission rate. The rate at which data is transmitted in Phase 0 may be less than or equal to a first maximum data transmission rate associated with the root complex device **801** and a second maximum data transmission rate associated with the endpoint device **803**.

In some embodiments of the present disclosure, the rate at which data is

transmitted is approximately the maximum data transmission rate associated with PCIe Gen1 or PCIe Gen2. The maximum data transmission rate associated with PCIe Gen 1 is 2.5 Gigatransfers per second (2.5 GT/s) and the maximum data transmission rate associated with PCIe Gen2 is 5.0 GT/s.

In addition, during Phase 0, both devices **801**, **803** may advertise the maximum

data transmission rate associated with each device **801**, **803**. In addition, both devices **801**, **803** make the link operational enough at the PCIe Gen 1 or PCIe Gen2 at a certain BER. For example, before transitioning to the next phase of the link training and equalization procedure, both devices **801**, **803** must exhibit that they may transmit signals with a minimum BER of $10^{-4}$. In some embodiments, if the target BER is not reached, the link may operate at a lower data transmission rate.

FIG. 9 is a schematic diagram illustrating an embodiment of Phase 1 of a PCIe

link training and equalization procedure. As shown, root complex device **901** and endpoint device **903** (having transmission logic **902a**, **904b** and receiver logic **902b**, **904a)** have transitioned to Phase 1 of the PCIe link training and equalization procedure.

In Phase 1 of a PCIe link training and equalization procedure, both devices **901**,

**903** make each lane of a communications link operational at a data transmission rate to exchange a second set of data (*e.g.,* TS1 Ordered Sets). In some embodiments, the data transmission rate in Phase 1 may be greater than the data transmission rate during Phase 0. For example, the data transmission rate during Phase 1 may be approximately the target data transmission rate during Phase 1 of the PCIe Gen 3 link training and equalization procedure (*i.e.,* 8 GT/s).

Most notably, during Phase 1 of a link training and equalization procedure

consistent with the present disclosure, both devices **901**, **903** advertise their FS and (LF) values. In some embodiments, a FS value may be the maximum differential voltage that may be generated by a transmitter component.

In addition, the sum of the transmitter or receiver coefficients should be equal to

FS according to some embodiments of the present disclosure:

$$FS = |C_{-1}| - |C_{-1}| + |C_{+1}|$$

Furthermore, a LF value may be the minimum differential voltage that may be

generated by a transmitter component according to some embodiments of the present disclosure. LF values should always be greater than minimum differential voltage:

$$C_0 - |C_{-1}| - |C_{+1}| \geq LF$$

The FS and LF values may be stored in the respective TS1 fields and advertised via the exchange of the TS1 Ordered Sets. As will be described below, the FS and LF values may be used in the computation of coefficients which may be applied to the transmitter or receiver settings of each device **901**, **903**.

In some embodiments, once the FS and LF values are received, they are stored in a storage unit in each device **901**, **903** (*e.g.*, block **702** of method **700**). For example, the FS and LF values are stored in configuration and status register(s). In some embodiments, the configuration and status registers may be implemented as flip flop device components.

Once stored, the present disclosure provides a mechanism to compute a set of coefficients from the FS and LF values which may also be stored in a configuration and status register(s). In some embodiments, the computed set of coefficients includes a pre-cursor component ($C_0$), cursor component ($C_{-1}$), and post-cursor component ($C_{+1}$). Most notably, in some embodiments of the present disclosure, the computed set of coefficients are coordinates of a midpoint along a maximum boost line.

There may be numerous configuration and status registers in each device **901**, **903**. In some embodiments, each configuration and status register may have a storage capacity of tens of bits and in the aggregate, the configuration and status registers may have a storage capacity of hundreds of thousands of data bits.

In some embodiments, system software, such as a system BIOS, Firmware, micro-code, etc. writes the computed coefficients into configuration and status registers. Subsequently, hardware (*e.g.*, device **901**, **903**) applies the computed coefficients to the transmitter or receiver settings. In some applications, configuration and status registers may serve as a means by which the devices **901**, **903** reports the status of the transmitter or receiver components (*e.g.*, transmission and receiver logic) settings and provides a mechanism by which software instructs hardware to function.

As such, system software may read the FS and LF values from at least one configuration and status register (block **703**) and input the values into an algorithm to compute a set of coefficients (block **704**) which may be applied to a transmitter component of an upstream port, for example.

As described above, the computed coefficients may be coordinates of a midpoint along a maximum boost line. In some embodiments, the midpoint along a maximum boost line may be computed according to the following algorithm described below:

<u>Case A</u>

If FS + LF are even and divisible by 4, $C_{-1} = C_{+1} =$ absolute value $[(FS-LF)/4]$, and $C_0 = FS - C_{-1} - C_{+1}$. For example, if FS = 40 and LF = 20, $C_{-1}$ and $C_{+1} =$ 5 and $C_0 = 30$. Thus, the midpoint of the maximum boost line and the computed coefficients are {5, 30, 5}.

<u>Case B</u>

If FS + LF is even but not divisible by 4, $C_{-1} =$ Ceil$[(FS-LF)/4]$, $C_{+1} =$ Floor$[(FS-LF)/4]$, and $C_0 = FS - C_{-1} - C_{+1}$. For example, if FS = 42 and LF = 20, $C_{-1} = 6$, $C_{+1} =$ 5, and $C_0 = 31$. Thus, the midpoint of the maximum boost line and the computed coefficients are {6, 31, 5}.

<u>Case C</u>

If FS + LF is odd and (FS - LF - 1 = VAL) is divisible by 4, $C_{-1} = C_{+1} =$ floor $[VAL/4]$, and $C_0 = FS - C_{-1} - C_{+1}$. For example, if FS = 41 and LF = 20, $C_{-1} = C_{+1} = 5$ and $Co = 31$. Thus, the midpoint of the maximum boost line and the computed coefficients are {5, 31, 5}.

<u>Case D</u>

If FS + LF is odd and (FS - LF - 1 = VAL) is not divisible by 4, $C_{-1} =$ Ceil$[VAL/4]$, $C_{+1} =$ floor$[VAL/4]$, and $C_0 = FS - C_{-1} - C_{+1}$. For example, if FS + LF is odd and (FS - LF - 1 = VAL) is not divisible by 4, $C_{-1} =$ ceil$[VAL/4]$, $C_{+1} =$ floor$[VAL/4]$, and $C_0 = FS - C_{-1} - C_{+1}$. For example, if FS = 42 and LF = 23, $C_{-1} = 5$, $C_{+1} = 4$, $C_0 = 33$. Thus, the midpoint of the maximum boost line and the computed coefficients are {5, 33, 4}.

In addition, the generated coefficients may be applied to predetermined or pre-computed offsets. For example, during post silicon lab testing, a device may be characterized such that offsets are computed per lane in the case that the device performs less than ideal. As such, the generated coefficients may not be directly applied, however, but may be applied while taking into account these predetermined or pre-computed offsets.

It should be also understood that determining the coefficients associated with the midpoint coordinates of the maximum boost line may be a starting point and that fine tuning may be performed to increase the communication performance along each lane and link. As such, the present disclosure provides the flexibility to go beyond the midpoint coordinates starting point to any other point in any other boost line (with some margin of error).

For example, once the initial coefficients are computed (*e.g.*, midpoint coordinates of the maximum boost line), a new set of coefficients may be computed by adding a predefined constant or set of predefined constants to the computed set of coefficients which represent the midpoint coordinates of the midpoint of the maximum boost line according to some embodiments of the present disclosure.

It should be understood that determining the coefficients associated with the

midpoint coordinates of the maximum boost line may be a starting point and that fine tuning may be performed to increase the communication performance along each lane and link. As such, the present disclosure provides the flexibility to go beyond the midpoint coordinates starting point to any other point in any other boost line (with some margin of error).

For example, once the initial coefficients are computed (*e.g.*, midpoint

coordinates of the maximum boost line), a new set of coefficients may be computed by adding a predefined constant or set of predefined constants to the computed set of coefficients which represent the midpoint coordinates of the midpoint of the maximum boost line according to some embodiments of the present disclosure.

For instance, "1" may be a predefined constant which may be applied to generate

a new set of coefficients for fine tuning. For example, if the computed set of coefficients is (3, 5, 4), applying a predefined constant of "1" should yield a new set of coefficients of (4, 6, 5) which may be applied to the transmitter or receiver settings of a device coupled to the communications link. If, for instance, the set of predefined constants is (1, 0, 0), the new set of coefficients computed should be (4, 5, 4).

One having ordinary skill in the art should appreciate that various predefined

constants and/or set of predefined constants may be applied to compute new set(s) of coefficients. Moreover, a unique set of predefined constants or set of coefficients may be applied in any order or iteration to generate new set(s) of coefficients when fine tuning the communication performance of the lane or link.

Accordingly, the new set(s) of coefficients may be generated by the following:

1) $Cm[5:0] = Cml[5:0] + (csr\_add\_precursor\_wire[2:0] - csr\_sub\_precursor\_wire[2:0])$

2) $Cp[5:0] = Cp1[5:0] + (csr\_add\_postcursor\_wire[2:0] - csr\_sub\_postcursor\_wire[2:0])$

3) $C_0 = FS - Cm - Cp$

In some embodiments, the configuration status and register(s) are per bundle or

per lane 3 bit configuration registers which are used to add or subtract an original computed value to sweep to a desired location.

Moreover, embodiments of the present disclosure further define a configuration

register FS_threshold. For example, in the event the link partners FS value which is captured during Phase 1 of the link training and equalization procedure is greater than FS_threshold, formulas 1,2, and 3 above are used. However, in the event he FS value is less than FS_threshold, then the configuration registers csr_add and csr_sub values are divided by 2 for the pre-cursor and post-cursor values to provide more flexibility.

In some embodiments, a system and method consistent with the present disclosure

may employ Phase 3 of a link training and equalization procedure with a single iteration such that the downstream port of the root complex device more effectively and efficiently.

Next, according to block **705**, resetting the communications link. In some

embodiments, the link is reset by either system software or hardware. After the link is reset, the device proceeds through the link training and equalization procedure in the second pass.

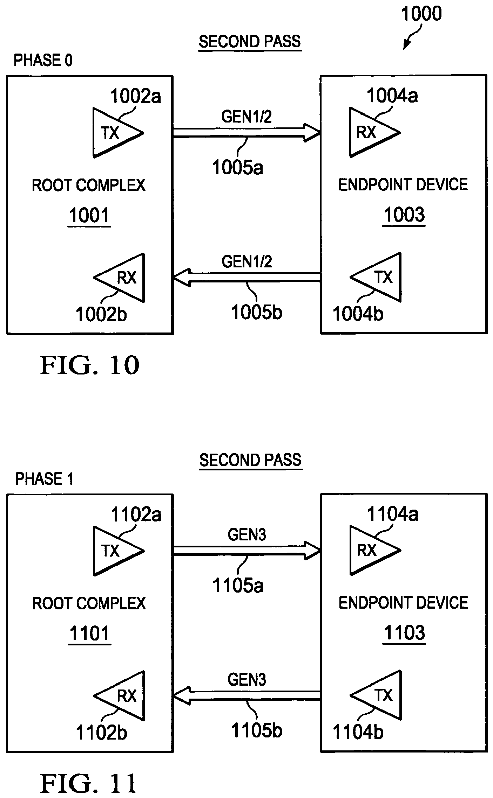

FIGS. 10-11 is a schematic diagram illustrating an embodiment of Phase 0 and

Phase 1 of a second pass of the link training and equalization procedure consistent with the present disclosure (block **706** of method **700**).

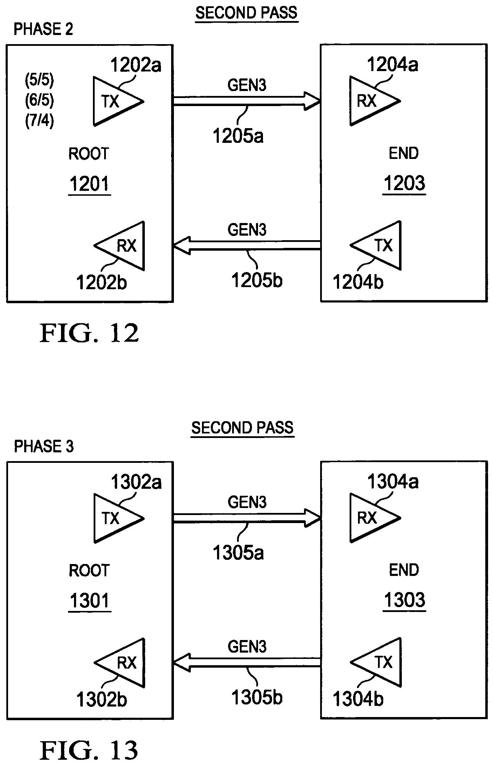

FIG. 12 is a schematic diagram illustrating an embodiment of Phase 2 of a PCIe

link training and equalization procedure (block **706** of method **700**). As shown, root complex device **1201** and endpoint device **1203** (having transmission logic **1202a**, **1204b** and receiver logic **1202b**, **1204a**) have transitioned to Phase 2 of the PCIe link training and equalization procedure.

In Phase 2 the upstream port (*e.g.,* of the endpoint device) adjusts the transmitter

settings of the Downstream port (*e.g.,* of the root complex device) to ensure that the upstream port receives the bit stream compliant with the target BER (*e.g.,* less than or equal to $10^{-12}$) for all channels (*e.g.*, lanes) of a communications link. An exemplary list of presets (5/5, 6/5, 7/4) indicate that multiple iterations may be performed to achieve the optimum link training and equalization transmitter (or receiver) settings.

FIG. 13 is a schematic diagram illustrating a conventional Phase 3 process of a

PCIe link training and equalization procedure (block **707** of method **700**). As shown, root complex device **1301** and endpoint device **1303** (having transmission logic **1302a**, **1304b** and receiver logic **1302b**, **1304a**) have transitioned to Phase 3 of the PCIe link training and equalization procedure.

In particular, block **707** of method **700** provides applying the computed first set of

coefficients to set up a transmitter component (*e.g.*, transmission logic) of the link partner component of the first component during Phase of PCIe Gen 3 link training and equalization procedure. Advantageously, a system and method consistent with the present disclosure may employ Phase 3 of the link training and equalization process with only a single iteration.

It should be understood that the present disclosure may be adapted such that

Phase 2 of the link training and equalization procedure may also employ a method described herein to generate coefficients for the downstream port during Phase 2 of the procedure. Accordingly, the present disclosure is not limited to Phase 3 of the link training and equalization procedure and may be employed to generated coefficients for a transmitter or receiver set up for a remote device, local device, remote complex device, or endpoint device. Moreover, the present disclosure is amenable to allow for fine tuning, if needed.

Furthermore, a link training and equalization procedure consistent with the

present disclosure may also provide a mechanism by which the transmitter setting in a device disregards a request by its link partner. For example, if a link partner has been discovered to be buggy, with regards to its hardware equalization algorithm, the primary device may disregard the coefficients, instructions, etc. sent by the link partner but apply the coefficients generated by the software application.

A method for link training and equalization which is consistent with some

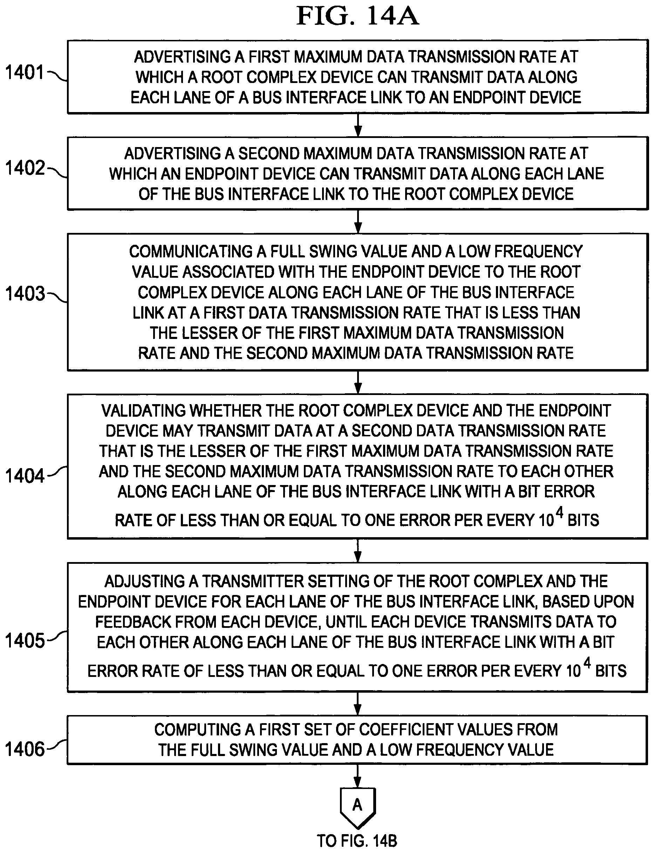

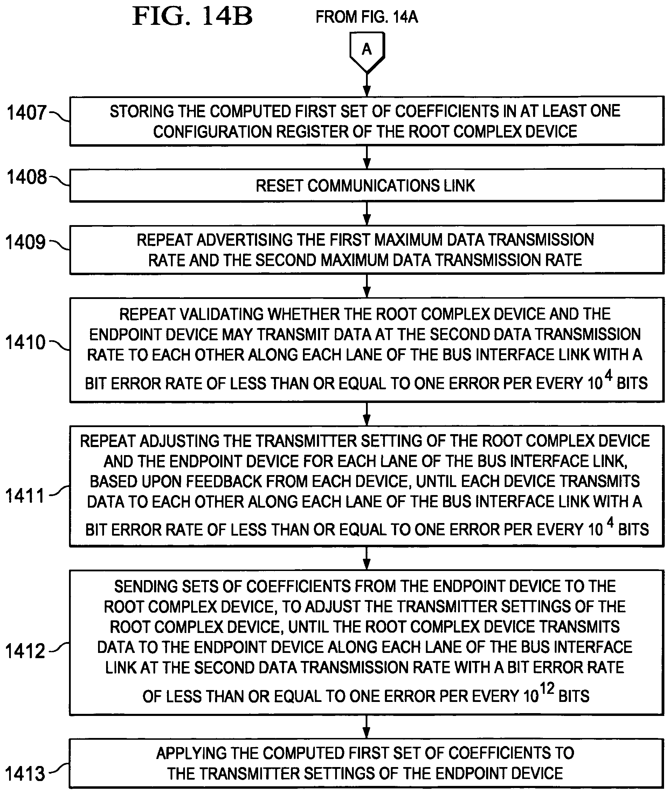

embodiments of the present disclosure is shown in FIGS. 14A - 14B. FIG. 14A illustrates blocks **1401 - 1406** whereas FIG. 14B illustrates blocks **1407** - **1413**. As shown in FIG. 14A, the method begins with block **1401 -** advertising a first maximum data transmission rate at which a root complex device may transmit data along each lane of a bus interface link to an endpoint device.

Additionally, advertising a second maximum data transmission rate at which the

endpoint device may transmit data along each lane of the bus interface link to the root complex device (block **1402**).

Next, according to block **1403**, communicating a FS value and a LF value

associated with the endpoint device to the root complex device along each lane of the bus interface link at a first data transmission rate that is less than the lesser of the first maximum data transmission rate and the second maximum data transmission.

Block **1404** provides validating whether the root complex device and the endpoint

device may transmit data at a second data transmission rate that is the lesser of the first maximum data transmission rate and the second maximum data transmission rate to each other along each lane of the bus interface link with a bit error rate of less than or equal to one error per every $10^4$ bits.

Block **1405** provides adjusting a transmitter setting of the root complex device

and the endpoint device for each lane of the bus interface link, based upon feedback from each device, until each device transmits data to each other along each lane of the bus interface link with a bit error rate of less than or equal to one error per every $10^4$ bits.

In addition, computing a first set of coefficient values from the FS value and a LF

value (block **1406**). Once the first set of coefficient values are computed, they are stored in at least one configuration register of the root complex device (block **1407**) as shown in FIG. 14B.

Notably, the actions described in blocks **1401-1406** [[of method **1400** ]]may be

performed during Phase 0 and Phase 1 of a PCIe Gen 3 link training and equalization procedure. Furthermore, blocks **1401-1406** may be characterized as the first pass of a link training and equalization procedure consistent with the present disclosure. In addition, other actions associated with Phases 0 and 1 are performed during the first pass of a link training and equalization procedure consistent with the present disclosure.

After the first pass is complete, the communications link between the root

complex device and the endpoint device is reset (block **1408**). After the communications link is reset, in some embodiments, Phase 0 and Phase 1 of a PCIe Gen3 link training and equalization procedure is repeated. For example, blocks **1409-1411** provide the following-repeat advertising the first maximum data transmission rate and the second maximum data transmission rate (block **1409**) and repeat validating whether the root complex device and the endpoint device may transmit data to each other along each lane of the bus interface link with a bit error rate of less than or equal to one error per every $10^4$ bits (block **1410**).

Furthermore, repeat adjusting the transmitter setting of the root complex device

and the endpoint device for each lane of the bus interface link, based upon feedback from the root complex device, until the endpoint device may transmit data to the root complex device along each lane of the bus interface link with a bit error of less than or equal to one error per every $10^4$ bits (block **1411**).

In some embodiments, after Phase 0 and 1 are completed, Phase 2 of a PCIe

Gen3 link training and equalization process, in part or in its entirety, may be performed. Block **1412** provides sending sets of coefficients from the endpoint device to the root complex device, to adjust the transmitter settings of the root complex device, until the root complex device transmits data to the endpoint device along each lane of the bus interface link at the second data transmission rate with a bit error rate of less than or equal to one error per every 10^ 12 bits.

Next, block **1413** provides applying the computed first set of coefficients to the

transmitter settings of the endpoint device.

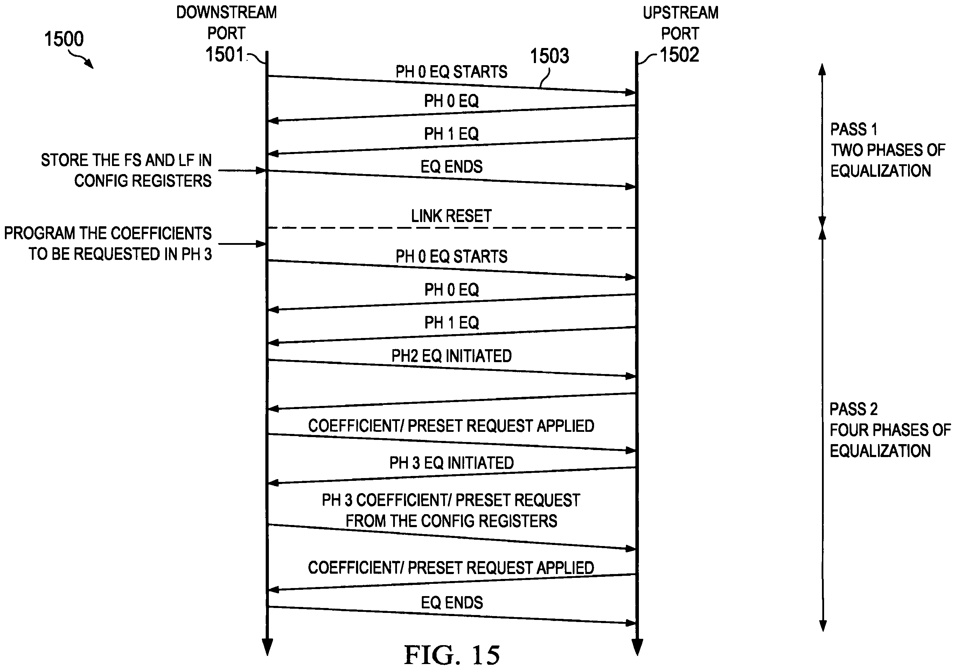

As shown, FIG. 15 is a display **1500** of two devices **1501**, **1502** undergoing a link

training and equalization procedure according to an embodiment of the present disclosure. In some embodiments, display **1500** is an illustration, in part, of the method described in FIGS. 14A - 14B as previously described.

In the figure, device **1501** is shown to represent a downstream port **1501**. In some
embodiments, downstream port **1501** is a component of a root complex device. In addition, device **1502** represents an upstream port **1502** which may be a component of an endpoint device.

The display **1500** also illustrates a series of arrows **1503** which indicate the
direction data may flow during each phase of the equalization procedure. Most notably, display **1500** shows that Phase 0 and Phase 1 of a link training an equalization procedure is performed before the link is rest.

After the link is reset, Phase 0 and Phase 1 is repeated and Phase 2 is initiated.

Thereafter, Phase 3 is implemented according to methods consistent with the present disclosure. AS shown, after Phase 3 is implemented, the generated coefficients from the FS and LF value associated with the upstream port are requested from the configuration registers which stored the coefficients. The generated coefficients are applied and the link training and equalization procedure may end.

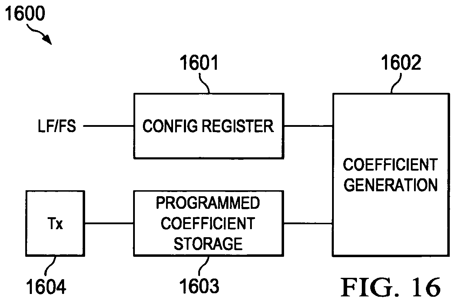

FIG. 16 is schematic diagram **1600** illustrating a system of components consistent
with the present disclosure. As shown, a system and method consistent with the present disclosure may comprises requesting and storing a set of full swing and low frequency values associated with a device coupled to a bus interface during a link training and equalization procedure.

In some embodiments, the full swing and low frequency values may be stored in
at least one configurations register (**1601**). Advantageously, a set of coefficients may be generated from the FS and LF values (**1602**). In time, the generated set of coefficients may be programmably stored (**1603**) and applied to a transmitter setting of the device associated with the LF and FS values (**1604**).

The following examples pertain to further embodiments. Specifics in the examples may be used anywhere in one or more embodiments. For instance, all optional features of the apparatus or system described herein may also be implemented with respect to the method or process described herein.

Example 1: A system, comprising: in response to a first component and a second component undergoing a link training and equalization procedure, a second component is to communicate a first set of data to the first component via a first transmission logic along at least one channel of a communications link; wherein the first component and the second component are to be link partners; wherein the first set of data further includes a full swing value and a low frequency value which are to be stored in a first storage unit of the first component; wherein the first component is to store a first computed set of coefficients from the full swing value and the low frequency value; and wherein the second component is to apply the first computed set of coefficients to the first transmission logic of the second component.

Example 2: The first computed set of coefficients includes midpoint coordinates
along a maximum boost line.

Example 3: The first component is a root complex device and the second
component is an endpoint device.

Example 4: The communications link includes a Peripheral Component
Interconnect Express (PCIe) bus interface link.

Example 5: The first storage unit is a configuration register.

Example 6: In response to the first component and the second component undergoing the equalization procedure, the first component communicates a second set of data to the second component to fine tune data transmission from the first transmission logic of the second transmitter to the first component.

Example 7: The first storage unit is readable by the software application.

Example 8: The computed first set of coefficients includes a precursor component, cursor component, and post-cursor component.

Example 9: A computer readable medium including code, when executed, to
cause a machine to perform the operations of: reading a requested low frequency value and a full swing value from a first register of a component to be coupled to a serial, point-to-point, differential interconnect; computing a set of optimal coefficients based on the low frequency value and the full swing value; and storing the set of optimal coefficients in one or more configuration registers for a subsequent request to utilize the set of optimal coefficients in configuring transmission logic.

Example 10: The optimal coefficients include a pre-cursor, cursor, and post cursor
values.

Example 11: The at least one of the optimal coefficients is computed by determining whether a sum of the low frequency value and the full swing value is divisible by 4, and if so, the at least one of the optimal coefficients is an absolute value of the difference between the full swing value and the low frequency value and divided by 4.

Example 12: The at least one of the optimal coefficients is computed by
determining whether a sum of the low frequency value and the full swing value is divisible by 4, and if not, the at least one of the optimal coefficients is a minimum of an absolute value of the difference between the full swing value and the low frequency value and divided by 4.

Example 13: An apparatus, comprising: a port to couple to a differential lane of a
serial, point-to-point link, the port to include configuration logic to equalize at least the differential lane in a first phase and a second phase, wherein the port is further to include first storage to hold a characteristic requested during the first phase, and wherein the configuration logic is further to initiate, during the second phase, a request to reference a set of coefficients that is to be generated based on at least the characteristic to be held in the first storage.

Example 14: A reset is to occur between the first phase and the second phase.

Example 15: The first storage include configuration registers, and wherein the port further includes second storage to hold the set of coefficients that is to be generated based on at least the characteristic.

Example 16: The characteristic is selected from a group consisting of a low frequency value, full swing value, and a combination of a low frequency value and a full swing value.

Example 17: The set of coefficients is to be generated based on at least the

characteristic during the first phase.

Example 18. The set of coefficients is to be generated based on at least the

characteristic during the second phase.

Example 19: The set of coefficients is to be generated based on at least the characteristic by code to be executed.

Example 20: An apparatus, comprising: a device having a downstream port which

in response to undergoing a link training and equalization procedure, is to receive a first ordered set from an upstream port of an endpoint device; wherein the first ordered set is to include a full swing value and a low frequency value; wherein the downstream port comprises at least one configuration register to store a first set of coefficients to be generated based on the full swing value and the low frequency.

Example 21: The downstream port further comprises a receiver.

Example 22: The first set of coefficients is stored in a single configuration register within the endpoint device.

Example 23: The at least one configuration register is implemented as a flip-flop storage element.

Example 24: The first set of coefficients are generated by at least one or more of

system BIOS, firmware, or multi-code.

Example 25: The device is coupled to a touch enabled display device.

Example 26: A link training and equalization procedure for devices coupled to a bus interface link, comprising: performing Phase 0 and Phase 1 of a PCI Express Generation 3 (PCIe Gen3) link training and equalization procedure; wherein a first set of data is communicated to a root complex device from an endpoint device via at least one channel of a communications link; storing a full swing value and a low frequency value in at least one register; reading the full swing value and the low frequency from the at least one register; computing a first set of coefficients from the full swing value and the low frequency value;

resetting the communications link; performing Phase 0, Phase 1, and Phase 2 of a PCIe Gen3 link training and equalization procedure; and applying the computed first set of coefficients to set up a transmission logic of the first component during Phase 3 of a PCIe Gen3 link training and equalization procedure.

Example 27: The first set of coefficients is computed by a software application.

Example 28: The resetting the communications link includes reconnecting the communications link such that the root complex device and the endpoint device may communicate with each other.

Example 29: Fine tuning fine tuning data transmission from the endpoint device to the root complex device.

Example 30: Applying a second set of coefficients to set up the transmission logic of the first component to fine tune the data transmission from the endpoint device to the root complex device wherein the second set of coefficients and the first set of coefficients differ by a predefined coefficient constant.

Example 31: Machine-readable storage including machine-readable instructions, when executed, to implement a method or realize an apparatus as claimed in any preceding example.

Example 32: An apparatus comprising means to perform a method as claimed in

any preceding example.

A design may go through various stages, from creation to simulation to

fabrication. Data representing a design may represent the design in a number of manners. First, as is useful in simulations, the hardware may be represented using a hardware description language or another functional description language. Additionally, a circuit level model with logic and/or transistor gates may be produced at some stages of the design process. Furthermore, most designs, at some stage, reach a level of data representing the physical placement of various devices in the hardware model. In the case where conventional semiconductor fabrication techniques are used, the data representing the hardware model may be the data specifying the presence or absence of various features on different mask layers for masks used to produce the integrated circuit. In any representation of the design, the data may be stored in any form of a machine readable medium. A memory or a magnetic or optical storage such as a disc may be the machine readable medium to store information transmitted via optical or electrical wave modulated or otherwise generated to transmit such information. When an electrical carrier wave indicating or carrying the code or design is transmitted, to the extent that copying, buffering, or re-transmission of the electrical signal is performed, a new copy is made. Thus, a communication provider or a network provider may store on a tangible, machine-readable medium, at least temporarily, an article, such as information encoded into a carrier wave, embodying techniques of embodiments of the present disclosure.

A module as used herein refers to any combination of hardware, software, and/or firmware. As an example, a module includes hardware, such as a micro-controller, associated with a non-transitory medium to store code adapted to be executed by the micro-controller. Therefore, reference to a module, in one embodiment, refers to the hardware, which is specifically configured to recognize and/or execute the code to be held on a non-transitory medium. Furthermore, in another embodiment, use of a module refers to the non-transitory medium including the code, which is specifically adapted to be executed by the microcontroller to perform predetermined operations. And as may be inferred, in yet another embodiment, the term module (in this example) may refer to the combination of the microcontroller and the non-transitory medium. Often module boundaries that are illustrated as separate commonly vary and potentially overlap. For example, a first and a second module may share hardware, software, firmware, or a combination thereof, while potentially retaining some independent hardware, software, or firmware. In one embodiment, use of the term logic includes hardware, such as transistors, registers, or other hardware, such as programmable logic devices.

Use of the phrase "to" or "configured to," in one embodiment, refers to arranging, putting together, manufacturing, offering to sell, importing and/or designing an apparatus, hardware, logic, or element to perform a designated or determined task. In this example, an apparatus or element thereof that is not operating is still "configured to" perform a designated task if it is designed, coupled, and/or interconnected to perform said designated task. As a purely illustrative example, a logic gate may provide a 0 or a 1 during operation. But a logic gate "configured to" provide an enable signal to a clock does not include every potential logic gate that may provide a 1 or 0. Instead, the logic gate is one coupled in some manner that during operation the 1 or 0 output is to enable the clock. Note once again that use of the term "configured to" does not require operation, but instead focus on the latent state of an apparatus, hardware, and/or element, where in the latent state the apparatus, hardware, and/or element is designed to perform a particular task when the apparatus, hardware, and/or element is operating.

Furthermore, use of the phrases "capable of/to," and or "operable to," in one embodiment, refers to some apparatus, logic, hardware, and/or element designed in such a way to enable use of the apparatus, logic, hardware, and/or element in a specified manner. Note as above that use of to, capable to, or operable to, in one embodiment, refers to the latent state of an apparatus, logic, hardware, and/or element, where the apparatus, logic, hardware, and/or element is not operating but is designed in such a manner to enable use of an apparatus in a specified manner.

A value, as used herein, includes any known representation of a number, a state, a logical state, or a binary logical state. Often, the use of logic levels, logic values, or logical values is also referred to as 1's and 0's, which simply represents binary logic states. For example, a 1 refers to a high logic level and 0 refers to a low logic level. In one embodiment, a storage cell, such as a transistor or flash cell, may be capable of holding a single logical value or multiple logical values. However, other representations of values in computer systems have been used. For example the decimal number ten may also be represented as a binary value of 1010 and a hexadecimal letter A. Therefore, a value includes any representation of information capable of being held in a computer system.

Moreover, states may be represented by values or portions of values. As an example, a first value, such as a logical one, may represent a default or initial state, while a second value, such as a logical zero, may represent a non-default state. In addition, the terms reset and set, in one embodiment, refer to a default and an updated value or state, respectively. For example, a default value potentially includes a high logical value, i.e. reset, while an updated value potentially includes a low logical value, i.e. set. Note that any combination of values may be utilized to represent any number of states.

The embodiments of methods, hardware, software, firmware or code set forth above may be implemented via instructions or code stored on a machine-accessible, machine readable, computer accessible, or computer readable medium which are executable by a processing element. A non-transitory machine-accessible/readable medium includes any mechanism that provides (i.e., stores and/or transmits) information in a form readable by a machine, such as a computer or electronic system. For example, a non-transitory machine-accessible medium includes random-access memory (RAM), such as static RAM (SRAM) or dynamic RAM (DRAM); ROM; magnetic or optical storage medium; flash memory devices; electrical storage devices; optical storage devices; acoustical storage devices; other form of storage devices for holding information received from transitory (propagated) signals (e.g., carrier waves, infrared signals, digital signals); etc, which are to be distinguished from the non-transitory mediums that may receive information there from.

Instructions used to program logic to perform embodiments of the disclosure may be stored within a memory in the system, such as DRAM, cache, flash memory, or other storage. Furthermore, the instructions may be distributed via a network or by way of other computer readable media. Thus a machine-readable medium may include any mechanism for storing or transmitting information in a form readable by a machine (e.g., a computer), but is not limited to, floppy diskettes, optical disks, Compact Disc, Read-Only Memory (CD-ROMs), and magneto-optical disks, Read-Only Memory (ROMs), Random Access Memory (RAM), Erasable Programmable Read-Only Memory (EPROM), Electrically Erasable Programmable Read-Only Memory (EEPROM), magnetic or optical cards, flash memory, or a tangible, machine-readable storage used in the transmission of information over the Internet via electrical, optical, acoustical or other forms of propagated signals (e.g., carrier waves, infrared signals, digital signals, etc.). Accordingly, the computer-readable medium includes any type of tangible machine-readable medium suitable for storing or transmitting electronic instructions or information in a form readable by a machine (e.g., a computer)

Reference throughout this specification to "one embodiment" or "an

embodiment" means that a particular feature, structure, or characteristic described in connection with the embodiment is included in at least one embodiment of the present disclosure. Thus, the appearances of the phrases "in one embodiment" or "in some embodiments" in various places throughout this specification are not necessarily all referring to the same embodiment. Furthermore, the particular features, structures, or characteristics may be combined in any suitable manner in one or more embodiments.

## Claims

1. A PCI Express apparatus, comprising:

   a device (560) having a downstream port (503) and **characterized in that** the downstream port in response to undergoing a link training and equalization procedure, is configured to receive a first ordered set from an upstream port (501) of an endpoint device (550);
   wherein the first ordered set is configured to include a full swing value and a low frequency value; and
   wherein the downstream port comprises at least one configuration register (1603) configured to store a first set of coefficients to be applied to transmitter or receiver settings and configured to achieve communication capability with minimal data loss to be generated based on the full swing value and the low frequency.

2. The apparatus of claim 1, wherein the downstream port further comprises a receiver (503).

3. The apparatus of claim 1, wherein the first set of coefficients is stored in a single configuration register within the endpoint device.

4. The apparatus of claim 1, wherein the at least one configuration register (1603) is implemented as a flip-flop storage element.

5. The apparatus of claim 1, wherein first set of coefficients are generated by at least one or more of system BIOS, firmware, or multi-code.

6. The apparatus of claim 1, wherein the device is coupled to a touch enabled display device.

7. The apparatus of claim 1, wherein the first set of coefficients include a precursor, cursor, and post cursor value.

8. A method performed in a PCI Express device and **characterised by** comprising:

   receiving (1403), in response to undergoing a link training and equalization procedure, a first ordered set from an upstream port of an endpoint device at a downstream port, wherein the first ordered set is configured to include a full swing value and a low frequency value;
   generating (1406) a first set of coefficients to be applied to transmitter or receiver settings and configured to achieve communication capability with minimal data loss; and
   storing (1407) the first set of coefficients in at least one configuration register (1603) of the downstream port.

9. The method of claim 8, wherein the downstream port comprises a receiver (503).

10. The method of claim 8, wherein storing the first set of coefficients comprises storing the first set of coefficients in a single configuration register (1603) of the downstream port.

11. The method of claim 8, wherein the at least one configuration register (1603) is implemented as a flip-flop storage element.

12. The method of claim 8, wherein generating the first set of coefficients comprises generating the first set of coefficients by at least one or more of system BIOS, firmware, or multi-code.

13. The method of claim 8, wherein the first set of coefficients include a precursor, cursor, and post-cursor value.

14. Machine-readable storage including machine-readable instructions, when executed, to implement a method as recited in claims 8 to 13 or realize an apparatus as claimed in any of claims 1 to 7

## Patentansprüche

1. PCI-Express-Einrichtung, die Folgendes umfasst:

   eine Einrichtung (560), die einen Downstream-Port (503) aufweist und **dadurch gekennzeichnet ist, dass** der Downstream-Port

als Reaktion auf Durchlaufen einer Verbindungstrainings- und -Ausgleichsprozedur dazu konfiguriert ist, eine erste geordnete Menge von einem Upstream-Port (501) einer Endpunktvorrichtung (550) zu empfangen;
wobei die erste geordnete Menge dazu konfiguriert ist, einen Voller-Ausschlag-Wert und einen Niedrige-Frequenz-Wert zu enthalten; und
wobei der Downstream-Port wenigstens ein Konfigurationsregister (1603) umfasst, das dazu konfiguriert ist, eine erste Menge an Koeffizienten zu speichern, die auf die Sender- oder Empfängereinstellungen anzuwenden sind und die dazu konfiguriert sind, eine Kommunikationsfähigkeit mit minimalem Datenverlust, die basierend auf dem Voller-Ausschlag-Wert und der niedrigen Frequenz erzeugt werden soll, zu erreichen.

2. Einrichtung nach Anspruch 1, wobei der Downstream-Port ferner einen Empfänger (503) umfasst.

3. Einrichtung nach Anspruch 1, wobei die erste Menge an Koeffizienten in einem einzigen Konfigurationsregister innerhalb der Endpunktvorrichtung gespeichert wird.

4. Einrichtung nach Anspruch 1, wobei das wenigstens eine Konfigurationsregister (1603) als ein Flip-Flop-Speicherelement implementiert ist.

5. Einrichtung nach Anspruch 1, wobei die erste Menge an Koeffizienten durch ein System-BIOS und/oder Firmware und/oder Multi-Code erzeugt wird.

6. Einrichtung nach Anspruch 1, wobei die Vorrichtung mit einer berührungsempfindlichen Anzeigevorrichtung gekoppelt ist.

7. Einrichtung nach Anspruch 1, wobei die erste Menge an Koeffizienten einen Pre-Cursor-, einen Cursor- und einen Post-Cursorwert beinhaltet.

8. Verfahren, das in einer PCI-Express-Vorrichtung durchgeführt wird und **dadurch gekennzeichnet ist, dass** es Folgendes umfasst:

Empfangen (1403) einer ersten geordneten Menge von einem Upstream-Port einer Endpunktvorrichtung an einem Downstream-Port als Reaktion auf Durchlaufen einer Verbindungstrainings- und -Ausgleichsprozedur, wobei die erste geordnete Menge dazu konfiguriert ist, einen Voller-Ausschlag-Wert und einen Niedrige-Frequenz-Wert zu enthalten;

Erzeugen (1406) einer ersten Menge an Koeffizienten, die auf Sender- oder Empfängereinstellungen anzuwenden sind und die dazu konfiguriert sind, eine Kommunikationsfähigkeit mit minimalem Datenverlust zu erreichen; und
Speichern (1407) der ersten Menge an Koeffizienten in wenigstens einem Konfigurationsregister (1603) des Downstream-Ports.

9. Verfahren nach Anspruch 8, wobei der Downstream-Port einen Empfänger (503) umfasst.

10. Verfahren nach Anspruch 8, wobei Speichern der ersten Menge an Koeffizienten Speichern der ersten Menge an Koeffizienten in einem einzigen Konfigurationsregister (1603) des Downstream-Ports umfasst.

11. Verfahren nach Anspruch 8, wobei das wenigstens eine Konfigurationsregister (1603) als ein Flip-Flop-Speicherelement implementiert ist.

12. Verfahren nach Anspruch 8, wobei Erzeugen der ersten Menge an Koeffizienten Erzeugen der ersten Menge an Koeffizienten durch ein System-BIOS und/oder Firmware und/oder Multi-Code umfasst.

13. Verfahren nach Anspruch 8, wobei die erste Menge an Koeffizienten einen Pre-Cursor-, einen Cursor- und einen Post-Cursorwert beinhaltet.

14. Maschinenlesbarer Speicher einschließlich maschinenlesbarer Anweisungen zum, wenn sie ausgeführt werden, Implementieren eines Verfahrens nach Ansprüchen 8 bis 13 oder zum Realisieren einer Einrichtung nach einem der Ansprüche 1 bis 7.

**Revendications**

1. Appareil à architecture PCI Express, comprenant :

un dispositif (560) ayant un port avant (503) et **caractérisé en ce que** le port aval après avoir subi une procédure d'égalisation et d'apprentissage de liaison, est configuré pour recevoir un premier ensemble ordonné d'un port amont (501) d'un dispositif de point d'extrémité (550) ;
dans lequel le premier ensemble ordonné est configuré pour comprendre une valeur d'excursion complète et une valeur de basse fréquence ; et
dans lequel le port aval comprend au moins un registre de configuration (1603) configuré pour stocker un premier ensemble de coefficients qui doivent être appliqués à des paramètres d'émetteur ou de récepteur et configuré pour obtenir une capacité de communication, une perte minimale de données étant générée en se basant sur la valeur d'excursion complète et la basse fréquence.

2. Appareil selon la revendication 1, dans lequel le port aval comprend en outre un récepteur (503).

3. Appareil selon la revendication 1, dans lequel le premier ensemble de coefficients est stocké dans un seul registre de configuration dans le dispositif de point d'extrémité.

4. Appareil selon la revendication 1, dans lequel le ou les registres de configuration (1603) sont mis en oeuvre sous la forme d'un élément de stockage à bascule.

5. Appareil selon la revendication 1, dans lequel le premier ensemble de coefficients sont générés par un système BIOS et/ou un micrologiciel et/ou une touche multicode.

6. Appareil selon la revendication 1, dans lequel le dispositif est couplé à un dispositif d'affichage tactile.

7. Appareil selon la revendication 1, dans lequel le premier ensemble de coefficients comprennent une valeur de pré-curseur, de curseur et de post-curseur.

8. Procédé réalisé dans un dispositif à architecture PCI Express et **caractérisé en ce qu'**il consiste à :

recevoir (1403), après avoir subi une procédure d'égalisation et d'apprentissage de liaison, un premier ensemble ordonné d'un port amont d'un dispositif de point d'extrémité au niveau d'un port aval, dans lequel le premier ensemble ordonné est configuré pour comprendre une valeur d'excursion complète et une valeur de basse fréquence ;
générer (1406) un premier ensemble de coefficients qui doivent être appliqués à des paramètres d'émetteur ou de récepteur et configuré pour obtenir une capacité de communication avec une perte minimale de données ; et
stocker (1407) le premier ensemble de coefficients dans au moins un registre de configuration (1603) du port aval.

9. Procédé selon la revendication 8, dans lequel le port aval comprend en outre un récepteur (503).

10. Procédé selon la revendication 8, dans lequel le stockage du premier ensemble de coefficients consiste à stocker le premier ensemble de coefficients dans un seul registre de configuration (1603) du port aval.

11. Procédé selon la revendication 8, dans lequel le ou les registres de configuration (1603) sont mis en oeuvre sous la forme d'un élément de stockage à bascule.

12. Procédé selon la revendication 8, dans lequel la génération du premier ensemble de coefficients consiste à générer le premier ensemble de coefficients par un système BIOS et/ou un micrologiciel et/ou une touche multicode.

13. Procédé selon la revendication 8, dans lequel le premier ensemble de coefficients comprennent une valeur de pré-curseur, de curseur et de post-curseur.

14. Dispositif de stockage lisible par une machine comprenant des instructions lisibles par une machine lorsqu'elles sont exécutées, pour mettre en oeuvre un procédé selon les revendications 8 à 13 ou réaliser un appareil selon l'une quelconque des revendications 1 à 7.

## FIG. 1

100

160 — POWER CONTROL

101

102

### CORE (101)

101a — ARCH REG    ARCH REG — 101b

120 — BTB AND I-TLB

125 — DECODE

130 — RENAME/ALLOCATOR

SCHEDULER/ EXECUTION UNIT(S)     REORDER/ RETIREMENT UNIT

140     135

LOWER LEVEL D-CACHE AND D-TLB — 150

### CORE (102)

102a — ARCH REG    ARCH REG — 102b

BTB AND I-TLB — 121

DECODE — 126

RENAME/ALLOCATOR — 131

SCHEDULER/ EXECUTION UNIT(S)     REORDER/ RETIREMENT UNIT

141     136

LOWER LEVEL D-CACHE AND D-TLB — 151

110 — ON-CHIP INTERFACE

105

DEVICE

180

176   177   SYSTEM MEMORY   175

FIG. 2

PROCESSOR — 205

206

GRAPHICS
ACCELERATOR
230

231 232 218

CONTROLLER
HUB

217

215

216 SYSTEM
MEMORY
210

219

221

222 220

223

I/O
DEVICE 226
225

LAYERED PROTOCOL STACK
300

TO PROCESSING CORE

TRANSACTION LAYER

305

LINK LAYER

310

PHYSICAL LAYER    320

LOGICAL SUB-BLOCK

321

ELECTRICAL SUB-BLOCK

322

TO EXTERNAL DEVICE

PACKET HEADER/PAYLOAD    306

| 311 | 306 | 312 |
|-----|-----|-----|

| 323 | 311 | 306 | 312 | 323 |
|-----|-----|-----|-----|-----|

FIG. 3

| GLOBAL ID 402 | | ATTRIBUTE BITS 404 | | | | |
|---|---|---|---|---|---|---|
| LOCAL TRANS ID 408 | SOURCE ID 410 | PRIORITY 412 | RESERVED 414 | ORDERING 416 | NO-SNOOP 418 | CHANNEL ID 406 |

FIG. 4

400

FIG. 5

FIG. 6

701 — PERFORMING PHASE 0 AND PHASE 1 OF A PCI EXPRESS GENERATION 3 LINK TRAINING AND EQUALIZATION PROCEDURE, WHEREIN A FIRST SET OF DATA IS COMMUNICATED TO A FIRST COMPONENT FROM A LINK PARTNER COMPONENT VIA AT LEAST ONE CHANNEL OF A COMMUNICATIONS LINK

702 — STORING A FULL SWING VALUE AND A LOW FREQUENCY VALUE IN AT LEAST ONE REGISTER

703 — READING THE FULL SWING VALUE AND THE LOW FREQUENCY VALUE FROM THE AT LEAST ONE REGISTER

704 — COMPUTING A FIRST SET OF COEFFICIENTS FROM THE FULL SWING VALUE AND THE LOW FREQUENCY VALUE

705 — RESETTING THE COMMUNICATIONS LINK

706 — PERFORMING PHASE 0, PHASE 1, AND PHASE 2 OF A PCI EXPRESS GENERATION 3 LINK TRAINING AND EQUALIZATION PROCEDURE

707 — APPLYING THE COMPUTED FIRST SET OF COEFFICIENTS TO SET UP A TRANSMITTER COMPONENT OF THE LINK PARTNER COMPONENT DURING PHASE 3 OF A PCI EXPRESS GENERATION 3 LINK TRAINING AND EQUALIZATION PROCEDURE

FIG. 7

800

FIRST PASS

PHASE 0

ROOT COMPLEX
801

802a
TX

GEN1/2
805a

GEN1/2
805b

RX
802b

804a
RX

ENDPOINT DEVICE
803

TX
804b

## FIG. 8

FIRST PASS

PHASE 1

ROOT COMPLEX
901

902a
TX

GEN3
905a

GEN3
905b

RX
902b

904a
RX

ENDPOINT DEVICE
903

TX
904b

## FIG. 9

1000

SECOND PASS

PHASE 0

FIG. 10

SECOND PASS

PHASE 1

FIG. 11

SECOND PASS

PHASE 2

(5/5)
(6/5)
(7/4)

1202a
TX

GEN3
1205a

1204a
RX

ROOT
1201

END
1203

RX
1202b

GEN3
1205b

TX
1204b

## FIG. 12

SECOND PASS

PHASE 3

1302a
TX

GEN3
1305a

1304a
RX

ROOT
1301

END
1303

RX
1302b

GEN3
1305b

TX
1304b

## FIG. 13

## FIG. 14A

1401 — ADVERTISING A FIRST MAXIMUM DATA TRANSMISSION RATE AT WHICH A ROOT COMPLEX DEVICE CAN TRANSMIT DATA ALONG EACH LANE OF A BUS INTERFACE LINK TO AN ENDPOINT DEVICE

1402 — ADVERTISING A SECOND MAXIMUM DATA TRANSMISSION RATE AT WHICH AN ENDPOINT DEVICE CAN TRANSMIT DATA ALONG EACH LANE OF THE BUS INTERFACE LINK TO THE ROOT COMPLEX DEVICE

1403 — COMMUNICATING A FULL SWING VALUE AND A LOW FREQUENCY VALUE ASSOCIATED WITH THE ENDPOINT DEVICE TO THE ROOT COMPLEX DEVICE ALONG EACH LANE OF THE BUS INTERFACE LINK AT A FIRST DATA TRANSMISSION RATE THAT IS LESS THAN THE LESSER OF THE FIRST MAXIMUM DATA TRANSMISSION RATE AND THE SECOND MAXIMUM DATA TRANSMISSION RATE

1404 — VALIDATING WHETHER THE ROOT COMPLEX DEVICE AND THE ENDPOINT DEVICE MAY TRANSMIT DATA AT A SECOND DATA TRANSMISSION RATE THAT IS THE LESSER OF THE FIRST MAXIMUM DATA TRANSMISSION RATE AND THE SECOND MAXIMUM DATA TRANSMISSION RATE TO EACH OTHER ALONG EACH LANE OF THE BUS INTERFACE LINK WITH A BIT ERROR RATE OF LESS THAN OR EQUAL TO ONE ERROR PER EVERY $10^4$ BITS

1405 — ADJUSTING A TRANSMITTER SETTING OF THE ROOT COMPLEX AND THE ENDPOINT DEVICE FOR EACH LANE OF THE BUS INTERFACE LINK, BASED UPON FEEDBACK FROM EACH DEVICE, UNTIL EACH DEVICE TRANSMITS DATA TO EACH OTHER ALONG EACH LANE OF THE BUS INTERFACE LINK WITH A BIT ERROR RATE OF LESS THAN OR EQUAL TO ONE ERROR PER EVERY $10^4$ BITS

1406 — COMPUTING A FIRST SET OF COEFFICIENT VALUES FROM THE FULL SWING VALUE AND A LOW FREQUENCY VALUE

A

TO FIG. 14B

## FIG. 14B

FROM FIG. 14A

A

1407 — STORING THE COMPUTED FIRST SET OF COEFFICIENTS IN AT LEAST ONE CONFIGURATION REGISTER OF THE ROOT COMPLEX DEVICE

1408 — RESET COMMUNICATIONS LINK

1409 — REPEAT ADVERTISING THE FIRST MAXIMUM DATA TRANSMISSION RATE AND THE SECOND MAXIMUM DATA TRANSMISSION RATE

1410 — REPEAT VALIDATING WHETHER THE ROOT COMPLEX DEVICE AND THE ENDPOINT DEVICE MAY TRANSMIT DATA AT THE SECOND DATA TRANSMISSION RATE TO EACH OTHER ALONG EACH LANE OF THE BUS INTERFACE LINK WITH A BIT ERROR RATE OF LESS THAN OR EQUAL TO ONE ERROR PER EVERY $10^4$ BITS

1411 — REPEAT ADJUSTING THE TRANSMITTER SETTING OF THE ROOT COMPLEX DEVICE AND THE ENDPOINT DEVICE FOR EACH LANE OF THE BUS INTERFACE LINK, BASED UPON FEEDBACK FROM EACH DEVICE, UNTIL EACH DEVICE TRANSMITS DATA TO EACH OTHER ALONG EACH LANE OF THE BUS INTERFACE LINK WITH A BIT ERROR RATE OF LESS THAN OR EQUAL TO ONE ERROR PER EVERY $10^4$ BITS

1412 — SENDING SETS OF COEFFICIENTS FROM THE ENDPOINT DEVICE TO THE ROOT COMPLEX DEVICE, TO ADJUST THE TRANSMITTER SETTINGS OF THE ROOT COMPLEX DEVICE, UNTIL THE ROOT COMPLEX DEVICE TRANSMITS DATA TO THE ENDPOINT DEVICE ALONG EACH LANE OF THE BUS INTERFACE LINK AT THE SECOND DATA TRANSMISSION RATE WITH A BIT ERROR RATE OF LESS THAN OR EQUAL TO ONE ERROR PER EVERY $10^{12}$ BITS

1413 — APPLYING THE COMPUTED FIRST SET OF COEFFICIENTS TO THE TRANSMITTER SETTINGS OF THE ENDPOINT DEVICE

FIG. 15

EP 2 778 938 B1

**1600**

**1601**

**1602**

LF/FS ── CONFIG REGISTER

COEFFICIENT GENERATION

Tx ── PROGRAMMED COEFFICIENT STORAGE

**1604**

**1603**

FIG. 16

**EP 2 778 938 B1**

**Patent documents cited in the description**

- US 20010299578 A1